# EUROPÄISCHE PATENTSCHRIFT

(11) **EP 4 646 777 B1**
(45) Veröffentlichungstag und Bekanntmachung des Hinweises auf die Patenterteilung: **09.12.2026**
(21) Anmeldenummer: 24702055.5
(22) Anmeldetag: 19.01.2024
(51) Int. Cl.: H02K 1/18, H02K 3/12, H02K 16/02, H02K 15/04

(54) **STATOR FÜR EINE RADIALFLUSS-DOPPELROTORMASCHINE, VERFAHREN ZUR HERSTELLUNG EINES STATORS FÜR EINE RADIALFLUSS-DOPPELROTORMASCHINE UND RADIALFLUSS-DOPPELROTORMASCHINE**
STATOR FOR A RADIAL-FLOW DOUBLE ROTOR MACHINE, METHOD FOR PRODUCING A STATOR FOR A RADIAL-FLOW DOUBLE ROTOR MACHINE, AND RADIAL-FLOW DOUBLE ROTOR MACHINE
STATOR POUR UNE MACHINE À DOUBLE ROTOR À FLUX RADIAL, PROCÉDÉ DE PRODUCTION D'UN STATOR POUR UNE MACHINE À DOUBLE ROTOR À FLUX RADIAL, ET MACHINE À DOUBLE ROTOR À FLUX RADIAL

(30) Priorität: 27.01.2023 DE 102023101990
(43) Veröffentlichungstag der Anmeldung: 12.11.2025
(73) Patentinhaber: DeepDrive GmbH, 85748 Garching bei München (DE)
(72) Erfinder: PETROVSKI, Dean, 81371 München (DE); ENDER, Stefan, 86673 Bergheim (DE)
(74) Vertreter: Isarpatent
(86) Internationale Anmeldenummer: PCT/EP2024/051244
(87) Internationale Veröffentlichungsnummer: WO 2024/156605

(56) Entgegenhaltungen:
- EP-A1- 1 892 814
- DE-A1- 102021 207 266
- JP-A- H08 242 564
- JP-U- S5 381 301
- KR-B1- 100 545 848

## Beschreibung

### GEBIET DER ERFINDUNG

Die vorliegende Erfindung betrifft einen Stator für eine Radialfluss-Doppelrotormaschine, insbesondere für einen Radnabenmotor, ein Verfahren zur Herstellung eines Stators für eine Radialfluss-Doppelrotormaschine und eine entsprechende Radialfluss-Doppelrotormaschine, insbesondere für einen Radnabenantrieb.

### TECHNISCHER HINTERGRUND

Elektromaschinen mit einem Stator und zwei rotationsfest miteinander verbundenen Läufern, sogenannte Doppelrotormaschinen, (neben Doppelrotor auch bezeichnet als Mehrfachrotor, Dual-Rotor, etc.) können sowohl die Drehmomentdichte als auch die Effizienz elektrischer Antriebe gegenüber herkömmlichen Elektromaschinen mit nur einem Rotor steigern. Das ist damit zu begründen, dass insbesondere in sogenannter "jochloser" Ausführung kein magnetischer Rückschluss im Stator erforderlich ist und hierdurch die Ummagnetisierungsverluste deutlich gesenkt werden können. Zudem steht bei zwei Rotoren grundsätzlich mehr Platz für die felderregenden Magnete (bei permanentmagneterregten Synchronmaschinen, PSM) bzw. das Leitermaterial (bei Induktionsmaschinen, IM oder elektrisch erregte Synchronmaschinen, ESM) zur Verfügung. Gemäß der Ausrichtung der magnetischen Feldlinien im Luftspalt können solche Maschinen in zwei Gruppen unterteilt werden, axial Fluss führend (Feldlinien parallel zur Rotationsachse, sog. Axialflussmaschinen) einerseits und radial Fluss führend (Feldlinien in radialer Richtung im Luftspalt, sog. Radialflussmaschinen) andererseits. Axialfluss-Doppelrotormaschinen sind beispielsweise in der DE 10 2015 226 105 A1 und der DE 10 2013 206 593 A1 beschrieben. Sie zeichnen sich durch eine hohe Drehmoment- und Leistungsdichte aus, sind aber in der Fertigung aufwändig, weil im Statorkern sehr komplexe Geometrien gestanzt oder pulvermetallurgisch gefertigt werden müssen. Bisher haben solche Maschinen den Sprung in die Großserienanwendung daher nicht vollzogen und finden lediglich in Nischenbereichen mit hohen Anforderungen an die Leistungsdichte, wie beispielsweise Rennsport, Luftfahrt, etc. Anwendung. Zudem erlauben die mechanischen Befestigungskonzepte für die Statorwicklung nur den Einsatz von Einzelzahnwicklungen mit entsprechenden Nachteilen in Bezug auf Geräuschanregungen.

Demgegenüber können bei Radialfluss-Doppelrotormaschinen für Wicklung und Blechpaket prinzipiell etablierte und großserientaugliche Fertigungsverfahren angewendet werden. Allerdings besteht hierbei eine große und weitgehend ungelöste technische Herausforderung in der Abstützung des im Statorkern entstehenden Drehmoments. Aufgrund der innen und außen rotierenden Teile kann das Statorblechpaket nicht wie ansonsten üblich in ein feststehendes Gehäuse montiert (beispielswiese eingepresst, verschraubt oder geklebt) werden. Das Drehmoment wird deshalb zu den axialen Enden von Statorblechpaket bzw. Statorwicklung geführt und dort abgestützt. Im Stand der Technik werden dazu verschiedene Ansätze vorgeschlagen, die jedoch alle mit erheblichen Nachteilen in Bezug auf die Funktion und/oder die Kosten verbunden sind.

Die EP 1 879 283 B1 beschreibt eine Möglichkeit der Ausführung der Statorwicklung als sogenannte Jochwicklung. Das ringförmig ausgeführte Statorblechpaket weist hierbei Nuten am Innen- und Außendurchmesser auf, zwischen denen sich ein in tangentialer Richtung wirksamer magnetischer Rückschluss (auch als Statorjoch bezeichnet) befindet. Hin- und Rückleiter jedes Wicklungsstranges sind hierbei in jeweils radial übereinander liegenden Nuten geführt und um das Joch herumgewickelt. Zwischen den Wicklungssträngen ist das Statorjoch axial zugänglich und kann beispielsweise durch axiale Verschraubungen am Gehäuse fixiert werden (z.B. beschrieben in JP 2018 082 600). Durch die axiale Pressung der Schrauben wird sowohl eine Torsionssteifigkeit des Blechpaketes sowie die Drehmomentabstützung am axialen Ende gewährleistet. Nord- und Südpol des Rotorfelds stehen sich jeweils gegenüber. Nachteilig bei diesem Konzept ist, dass der magnetische Fluss vollständig über das zwischen den Statornuten liegende Rückschlussjoch geführt werden muss. Dies führt zum einen zu einem erhöhten Gewicht des Statorblechpakets und erhöht die Eisenverluste signifikant. Die magnetischen Feldlinien beider Rotorflüsse schließen sich über den magnetischen Rückfluss im Statorblechpaket und rufen dort Eisenverluste hervor. Zudem müssen alle Einzelspulen der Jochwicklung im Bereich des Wickelkopfes parallel oder in Reihe verschaltet werden, was wiederum zu einem Bauraumkonflikt mit der Drehmomentabstützung führt. Die um das Joch gewickelte Wicklung erlaubt aber eine direkte mechanische Kontaktierung des Statorblechpakets.

Eine deutliche Gewichts- und Verlusteinsparung kann erzielt werden, wenn die Magnetisierungsrichtungen der radial übereinander liegenden Magnete in die gleiche Richtung zeigen und die Bestromungsrichtungen der übereinander in den Nuten liegenden Leiter identisch sind. In diesem Fall kann der magnetische Rückschluss im Stator entfallen und es entsteht eine sogenannte "jochlose" Doppelrotormaschine mit verteilter Wicklung. Die magnetischen Feldlinien schließen sich über dem Rotor. Ein magnetischer Rückschluss im Stator ist nicht erforderlich, wodurch Gewicht und Eisenverluste in derartigen Maschinen sehr gering sind. Die verteilte Wicklung erlaubt aber keine direkte mechanische Kontaktierung des Statorblechpakets zur Drehmomentabstützung. Beispielsweise beschreibt die WO 2004/004098 A1 eine jochlose Ausführung mit verteilter Wicklung.

Auch bei einer sogenannten "jochlosen" Ausführung kann es sinnvoll sein, zur mechanischen Verbindung der Statorzähne dennoch ein dünnes Joch auszuführen, elektromagnetisch ist dieses jedoch nicht notwendig. Der Begriff "jochlos" bezieht sich somit auf die elektromagnetische Flussführung, in der im Stator kein Fluss in tangentialer Richtung vorhanden ist. Die Wicklung kann hierbei aber nicht als Jochwicklung ausgeführt werden, da Hin- und Rückleiter der Wicklungsstränge radial am Umfang verteilt sind und damit eine verteilte Wicklung bilden. Hierdurch entstehen Wickelköpfe verteilter Wicklungen, die die Zugänglichkeit des Blechpakets in axialer Richtung erschweren. Die rein radiale Flussführung verbietet außerdem den Einsatz axialer, metallischer Verschraubungen, da diese Leiterschleifen mit viel verkettetem Fluss und hohen zusätzlichen Stromwärmeverlusten bilden.

Zur axialen Abstützung werden im Stand der Technik verschiedene Hilfskonstruktionen zur Drehmomentabstützung vorgeschlagen, beispielweise beschrieben in der DE 10 2010 055 030 A1 oder US 7,557,486 B2. Problematisch ist hierbei, dass elektrisch und/oder magnetisch leitfähige Metalle nicht oder nur sehr eingeschränkt in den flussführenden Bereich hineinragen dürfen, was die Materialauswahl und geometrische Auslegung stark einschränkt. Demgegenüber können Kunststoffbauteile, Klebstoffe und/oder Vergussmaterialien auch im flussführenden Bereich eingesetzt werden. Mit solchen Materialien ist es aber sehr schwierig, die hohen Anforderungen hinsichtlich Temperaturstabilität und mechanischer Festigkeit zu erreichen.

Zum weiteren technologischen Hintergrund wird auf folgende Druckschriften verwiesen:
Die Druckschrift DE 10 2021 207266 A1 beschreibt eine Antriebseinrichtung, insbesondere elektrische Maschine oder Getriebeeinrichtung für eine elektrische Achse.

Die Druckschrift JP S53 81301 U beschreibt einen Stator für eine rotierende elektrische Maschine.

Die Druckschrift EP 1 892 814 A1 beschreibt einen Motor des Typs mit Doppelrotor.

Die Druckschrift KR 100 545 848 B1 beschreibt einen Radialkern-Doppelrotor-BCD-Motor und seine Herstellungsverfahren.

Die Druckschrift JP H08 242564 A beschreibt eine Bindungsstruktur einer rotierenden elektrischen Maschine.

### ZUSAMMENFASSUNG DER ERFINDUNG

Vor diesem Hintergrund liegt der vorliegenden Erfindung die Aufgabe zugrunde, einen verbesserten Stator für eine Radialfluss-Doppelrotormaschine, ein verbessertes Verfahren zur Herstellung eines Stators für eine Radialfluss-Doppelrotormaschine und eine verbesserte Radialfluss-Doppelrotormaschine anzugeben.

Erfindungsgemäß wird diese Aufgabe durch einen Stator mit den Merkmalen des Patentanspruchs 1 und/oder durch ein Verfahren mit den Merkmalen des Patentanspruchs 8 und/oder durch eine Radialfluss-Doppelrotormaschine mit den Merkmalen des Patentanspruchs 10 gelöst.

Demgemäß ist vorgesehen:
- Ein Stator für eine Radialfluss-Doppelrotormaschine, insbesondere für einen Radnabenmotor, mit: einem Statorkern; einer in dem Statorkern platzierten Wicklung, welche zur Drehmomentabstützung des Stators selbsttragend ausgeführt ist, wobei die Wicklung an zumindest einem axialen Ende über den Statorkern hinausragt; einer axial zu dem Statorkern versetzt angeordneten Trägereinrichtung, welche zum formschlüssigen Eingriff mit der Wicklung an dem zumindest einen axialen Ende zur Drehmomentabstützung ausgebildet ist; wobei die Wicklung aus miteinander verbundenen Leiterstäben gebildet ist und eine radial innere Lage von schraubenförmig angeordneten Leiterstäben und eine radial äußere Lage von entgegengesetzt schraubenförmig angeordneten Leiterstäben aufweist, wobei die Leiterstäbe jeweils an einem ersten Leiterstabende gekröpft und an einem zweiten Leiterstabende ungekröpft ausgebildet sind, wobei die ersten Leiterstabenden der Leiterstäbe der radial äußeren Lage derart angeordnet sind, dass die Kröpfung jeweils nach radial innen ausgerichtet ist, und die ersten Leiterstabenden der Leiterstäbe der radial inneren Lage derart angeordnet sind, dass die Kröpfung jeweils nach radial außen ausgerichtet ist.
- Ein Verfahren zur Herstellung eines Stators für eine Radialfluss-Doppelrotormaschine, insbesondere eines Stators nach gemäß der Erfindung, mit den Schritten: Bereitstellen eines Statorkerns mit jeweils eine Schraubenlinie beschreibenden radial außenliegenden Statornuten und jeweils eine Schraubenlinie mit entgegengesetzter Windungsrichtung beschreibenden radial innen liegenden Statornuten; Bereitstellen von einzelnen Leiterstäben, die an einem ersten Leiterstabende gekröpft und an einem zweiten Leiterstabende ungekröpft ausgebildet sind; Einführen der einzelnen Leiterstäbe an einem ersten axialen Ende des Statorkernsin die radial äußeren Statornuten, derart, dass an dem ersten axialen Ende die Kröpfung der ersten Leiterstabenden der Leiterstäbe der radial äußeren Lage nach radial innen ausgerichtet ist; Einführen der einzelnen Leiterstäbe an einem zweiten axialen Ende des Statorkerns in die radial inneren Statornuten, derart, dass an dem zweiten axialen Ende die Kröpfung der ersten Leiterstabenden der Leiterstäbe der radial inneren Lage nach radial außen ausgerichtet ist; und Fügen der in die inneren und äußeren Statornuten eingeführten Leiterstäbe an den Leiterstabenden zur Ausbildung von Leiterschleifen, wobei an dem ersten axialen Ende des Statorkerns jeweils die ersten Leiterstabenden der Leiterstäbe der radial äußeren Lage mit den zweiten Leiterstabenden der Leiterstäbe der radial inneren Lage und an dem zweiten axialen Ende des Statorkerns jeweils die ersten Leiterstabenden der Leiterstäbe der radial inneren Lage mit den zweiten Leiterstabenden der Leiterstäbe der radial äußeren Lage gefügt werden.
- Radialfluss-Doppelrotormaschine, insbesondere für einen Radnabenantrieb, mit: einem Stator gemäß einem der Erfindung oder hergestellt mit einem Verfahren gemäß Efindung; einem radial innerhalb des Statorkerns des Stators angeordneten ersten Rotor; und einem radial außerhalb des Statorkerns des Stators angeordneten zweiten Rotor.

Die der vorliegenden Erfindung zugrundeliegende Erkenntnis besteht darin, dass ein Fügen von geradlinigen Leiterstäben durch Umformung der Leiterstabenden stark erleichtert werden kann.

Die der vorliegenden Erfindung zugrundeliegende Idee besteht nun darin, gekröpfte Leiterstäbe einzusetzen, um ein Fügen zu erleichtern. Die gekröpften Leiterstäbe können somit im montierten Zustand der Wicklung ohne Umformung mit geringem Aufwand gefügt werden. Insbesondere wird auf diese Weise vorteilhaft vermieden, die Leiterstäbe erst im montierten Zustand umzuformen, was mechanisch hochbelastend wäre. Mit den gekröpften Leiterstäben kann somit auf sehr einfache und besonders wirtschaftlich zu fertigende Weise eine selbstragende Wicklung bereitgestellt werden.

Unter einer selbsttragenden Auslegung der Wicklung ist zu verstehen, dass eine zur Abstützung des Antriebsmoments ausreichende Steifigkeit und Festigkeit der Wicklung gegenüber Torsion um die Maschinenachse gegeben ist. Die selbsttragende Wicklung ist insbesondere in einen weichmagnetischen Statorkern zur magnetischen Flussführung eingebettet. Hierbei ergibt sich der besondere Vorteil, dass der Statorkern selbst keine inhärente Torsionssteifigkeit bezüglich der Maschinenachse benötigt und auch keine sonstige Hilfskonstruktion zur Festlegung des Statorkerns benötigt wird. Vielmehr wird das Drehmoment, insbesondere vollständig, über die Wicklung abgestützt.

Somit wird eine bisher unbekannte bzw. auf dem Gebiet der Radialfluss-Doppelrotormaschinen bisher technisch nicht umsetzbare Funktionsintegration geschaffen, indem der Wicklung zusätzlich zur Stromführung eine tragende Funktion zur Abstützung des Drehmoments gegeben und mechanisch an einem axialen Ende eine Fixierung der Wicklung außerhalb des Statorkerns erreicht wird.

Zur Herstellung einer derartigen Wicklung wird eine integrale Fertigung der Wicklung in dem bestehenden Statorkern vorgeschlagen. Die Einzelstäbe der Wicklung werden dazu in axialer Richtung der Schraubenlinie der Statornuten folgend durch die radial inneren und radial äußeren Statornuten gesteckt und an den Leiterenden verbunden. Vorzugsweise wird hierbei eine stoffschlüssige Verbindung durch Schweißen oder Löten vorgesehen. Somit wird die Wicklung formschlüssig mit dem Statorkern verbunden.

Die erfindungsgemäße Kröpfung der Leiterstäbe an einem Leiterstabende vermeidet insbesondere eine mechanischen Umformung von ursprünglich geradlinigen Leiterstabenden nach radial innen oder nach radial außen nach Montage einer Wicklung innerhalb eines Stators. Die Kröpfung ist vielmehr bereits vor der Montage vorgesehen und kann als ein räumlicher Vorsprung, Versatz und/oder Abbiegung, insbesondere winklige Abbiegung, des jeweiligen sonst geradlinigen Leiterstabs verstanden werden. Auf diese Weise wird ein radialer Abstand zwischen der radial inneren Lage von schraubenförmig angeordneten Leiterstäben und der radial äußeren Lage von entgegengesetzt schraubenförmig angeordneten Leiterstäben der Wicklung durch die Kröpfung der jeweiligen ersten Leiterstabenden zur Bildung der Wicklung räumlich überbrückt.

Die entgegengesetzte radiale Ausrichtung der Kröpfung der Leiterstabenden der jeweiligen radialen Lagen ist demnach ausschlaggebend für die Vermeidung einer nachträglichen mechanischen Umformung der Leiterstäbe. Dementsprechend wird eine sehr einfache Herstellung des Stators ermöglicht, welche vorteilhafterweise die Notwendigkeit zusätzlicher Prozessschritte vermeidet. Ferner sind auch keine weiteren zusätzlichen Bauteile, Komponenten und/oder Verbindungen zur Überbrückung des radialen Abstands zwischen der radial inneren Lage und der radial äußeren Lage erforderlich. Dies führt demnach auch zu einer Reduzierung der gesamten Teileanzahl des Stators und bewirkt zudem eine Reduzierung der Komplexität des Zusammenbaus.

Die Kröpfung der jeweiligen ersten Leiterstabenden der Leiterstäbe der radial äußeren Lage und radial inneren Lage kann gemäß einer Ausführungsform auch zusätzlich eine Umfangskomponente, insbesondere eine Verdrehung oder Torsion des Leiterstabs oder des Leiterstabendes, aufweisen. Folglich kann die Kröpfung der jeweiligen ersten Leiterstabenden der Leiterstäbe der radial äußeren Lage und radial inneren Lage als eine radiale und in Umfangsrichtung räumliche Überbrückung ausgebildet sein, insbesondere um einen Überlapp der eine Schlaufe bildenden gegensinnig schraubenförmig verlaufenden Leiterstäbe zu erreichen. Ein solcher Überlapp kann dann auf einfache Weise direkt gefügt, beispielsweise verschweißt, insbesondere durch Laserstrahlschweißen, oder verlötet werden.

Der gewählte Steigungswinkel (auch Schränkwinkel) der Statornuten bzw. der damit beschriebenen Schraubenlinien stellt sicher, dass mittels Verbindung der eingebrachten Leiterstäbe Leiterschleifen gebildet werden. Der in Bezug auf die Mittelachse überstrichene Winkel der Leiterschleifen in der Maschine umschließt jeweils einen magnetischen Pol der Rotoren. Auf diese Weise ist trotz der Funktionsintegration eine sehr einfache Herstellung des Stators ermöglicht, welche mit sehr wenigen Bauteilen und vergleichsweise einfacher herkömmlicher Verbindungstechnik und dadurch auch mit sehr wenigen Fertigungsschritten auskommt.

Der so ausgeführte Stator kann nun mit verschiedenen dem Fachmann bekannten inneren und äußeren Rotoren zu einer erfindungsgemäßen elektrischen Maschine vervollständigt werden. Hierzu zählen beispielsweise permanentmagneterregte Rotoren mit Oberflächenmagneten und/oder vergrabenen Magneten, Kurzschlussläufer oder elektrisch erregte Läufer. Auch hybride Varianten mit unterschiedlichen Läufervarianten im inneren und äußeren Rotor können vorgesehen sein. Eine besonders vorteilhafte Ausführung ergibt sich, wenn die Rotoren aus weichmagnetischem Vollmaterial und mit oberflächenmontierten Permanentmagneten ausgeführt sind. Das geringe Oberfeldspektrum der hier beschriebenen Wicklungsvarianten und der durch die Magnete gewährleistete Abstand des Vollmaterials vom Luftspalt verhindert das Entstehen unzulässig großer Verluste durch Wirbelströme in den Rotoren. In dieser Ausführung können dann vorteilhaft vergleichsweise hohe Wirkungsgrade erreicht werden und die Rotoren dennoch sehr kostengünstig gefertigt werden.

Die Trägereinrichtung wird durch eine geeignete Methode fest mit der Basis als dem stehenden Teil der elektrischen Maschine verbunden. Eine mögliche Ausführung sieht dazu Ausnehmungen, beispielsweise Durchgangsbohrungen, für kraftschlüssige Befestigungsmittel, wie beispielsweise Schrauben, vor. Es wären aber selbstverständlich alternativ oder zusätzlich auch formschlüssige Verbindungsmittel und/oder eine stoffschlüssige Verbindung denkbar.

Erfindungsgemäß ist die Wicklung aus miteinander, insbesondere stabwerkartig, verbundenen Leiterstäben gebildet. Insbesondere können die Leiterstäbe stoffschlüssig verbunden sein, beispielsweise durch Schweißen oder Löten. Es wären aber auch andere Verbindungstechniken denkbar. Vorzugsweise sind jeweils zwei Leiterstäbe an den Leiterstabenden verbunden und alle Leiterstäbe gemeinsam bilden so ein Stabwerk. Das mit den Leiterstäben gebildete Stabwerk ist vorteilhaft in sich torsionssteif gestaltet und zur Momentenübertragung um die Mittelachse des Stators ausgelegt. Ferner sind die Leiterstäbe mit einer zur Kraftübertragung ausreichenden Dicke ausgebildet. Bei einem Radnabenmotor kann die Dicke der Leiterstäbe beispielsweise im Bereich mehrerer Millimeter ausgebildet sein. Es kann sich insbesondere um Stäbe mit Vierkantprofil handeln mit Kantenlängen von mehreren Millimetern.

Erfindungsgemäß weist die Wicklung eine radial innere Lage von schraubenförmig angeordneten Leiterstäben und eine radial äußere Lage von entgegengesetzt schraubenförmig angeordneten Leiterstäben auf. Auf diese Weise wird durch die Wicklung ein Stabwerk gebildet, welches eine hohe Torsionssteifigkeit aufweist. Die Leiterstäbe der inneren Lage und die Leiterstäbe der äußeren Lage beschreiben dabei jeweils eine Schraubenlinie, deren Windungsrichtungen bzw. Steigungen entgegengesetzt zueinander sind. Ein in Bezug auf die Mittelachse des Stators überstrichener Winkel der Schraubenlinie zwischen Beginn und Ende eines Leiterstabs ist insbesondere derart ausgebildet, dass in einer Radialfluss-Doppelrotormaschine eine Leiterschleife pro Pol der Rotoren gebildet ist. Der vorzusehende überstrichene Winkel lässt sich somit aus dem Quotienten aus einer ganzen Umdrehung (2π oder 360°) und der doppelten Polpaarzahl p errechnen.

Insbesondere ist die vorliegende Erfindung besonders vorteilhaft für einen Radnabenmotor, bevorzugt für ein Kraftfahrzeug, einsetzbar. Durch die erfindungsgemäße Konstruktion lässt sich aufgrund der Funktionsintegration die Masse einer Radialfluss-Doppelrotormaschine verringern und die Drehmomentdichte erhöhen, was insbesondere bei Radnabenmotoren vorteilhaft eine Reduzierung ungefederter Massen bedeutet. Ferner kann erfindungsgemäß bei vergleichsweise hohem Durchmesser eine vergleichsweise kurze axiale Länge realisiert werden, was insbesondere im Radinneren bezüglich der Drehmomentabstützung und des Bauraums vorteilhaft ist.

Andererseits sind erfindungsgemäß trotz der äußerst kompakten Bauweise auch sehr hohe Drehmomente möglich, welche insbesondere hoch genug sind um ohne ein Getriebe direkt ein Rad eines Fahrzeugs anzutreiben. Auf diese Weise werden besonders vorteilhaft Getriebeverluste vermieden, weiteres Gewicht eingespart und es sind besonders hohe Wirkungsgradvorteile erzielbar.

Weiterhin erlaubt dieses hohe Drehmoment, welches bei Baugrößen innerhalb der Dimensionen üblicher Kraftfahrzeugfelgen bereits deutlich vierstellig, insbesondere größer als 5000 Nm, möglich ist, und so bereits in den Bereich der Haftungsgrenze von üblichen Straßenreifen reicht, sogar eine Hinterachs-Radbremse durch den Radnabenmotor zu ersetzen. Es sind somit bei der Anwendung als Radnabenmotor besondere Synergien ermöglicht.

Offenbart ist somit ferner gemäß einem Aspekt eine Fahrzeugachse, insbesondere für ein Kraftfahrzeug, mit einer erfindungsgemäßen Radialfluss-Doppelrotormaschine, welche getriebelos mit einem Antriebsrad gekoppelt ist.

Offenbart ist ferner gemäß einem Aspekt ein Kraftfahrzeug mit einer derartigen Fahrzeugachse.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform sind zur Ausbildung von Leiterschleifen jeweils die ersten Leiterstabenden der Leiterstäbe der radial äußeren Lage mit den zweiten Leiterstabenden der Leiterstäbe der radial inneren Lage gefügt. Ferner sind jeweils die ersten Leiterstabenden der Leiterstäbe der radial inneren Lage mit den zweiten Leiterstabenden der Leiterstäbe der radial äußeren Lage gefügt. Auf diese Weise werden die Leiterstäbe der radial inneren Lage und die Leiterstäbe der radial äußeren Lage zum Bilden der selbsttragenden Wicklung zueinander geführt um sie zu fügen. Ferner wird vorteilhafterweise durch das Fügen an den Leiterstabenden der jeweiligen Leiterstäbe eine mechanisch stabile Wicklung mit verbesserter Spannungs- und Kräfteverteilung bereitgestellt.

Gemäß einer Ausführungsform sind die Leiterstäbe der radial äußeren Lage in äußeren Statornuten aufgenommen und mit dem ersten Leiterstabende an einem ersten axialen Ende des Statorkerns angeordnet, und die Leiterstäbe der radial inneren Lage in inneren Statornuten aufgenommen und mit dem ersten Leiterstabende an einem zweiten axialen Ende des Statorkerns angeordnet. Ferner sind zur Ausbildung von Leiterschleifen an dem ersten axialen Ende jeweils die ersten Leiterstabenden der Leiterstäbe der radial äußeren Lage mit den zweiten Leiterstabenden der Leiterstäbe der radial inneren Lage gefügt, und an dem zweiten axialen Ende jeweils die ersten Leiterstabenden der Leiterstäbe der radial inneren Lage mit den zweiten Leiterstabenden der Leiterstäbe der radial äußeren Lage gefügt. Auf diese Weise sind die Leiterstäbe der radial inneren Lage und radial äußeren Lage der Wicklung in den jeweiligen inneren und äußeren Statornuten, insbesondere vollumfänglich, eingebettet. Ferner wird somit ein Stator mit einer hohen Leistungsdichte und einer geringen baulichen Größe bereitgestellt.

Gemäß einer Ausführungsform sind die ersten Leiterstabenden mit den zweiten Leiterstabenden im Überlappstoß gefügt, insbesondere durch Laserstrahlschweißen. Der Überlappstoß kann als Überlappung der jeweiligen zueinander gerichteten Oberflächen der ersten Leiterstabenden und zweiten der Leiterstäbe der radial inneren Lage und radial äußeren Lage ausgebildet sein. Auf diese Weise wird eine große Oberfläche und/oder eine hohe Werkstoffdicke für das Fügen der ersten und zweiten Leiterstabenden bereitgestellt. Die Schweißverbindung kann dabei, insbesondere abhängig vom Schweißverfahren, als Kehlnaht, Stumpfnaht oder Kombination aus Nahtarten ausgeführt sein. Ferner kann gemäß einer Ausführungsform der Überlappstoß der ersten Leiterstabenden und zweiten Leiterstabenden durch Elektronenstrahlschweißen gefügt sein.

Gemäß einer Ausführungsform entspricht eine radiale Tiefe der Kröpfung jeweils einem radialen Abstand der radial inneren Lage und der radial äußeren Lage der Leiterstäbe innerhalb des Statorkerns. Auf diese Weise wird der radiale Abstand zwischen der radial inneren Lage von Leiterstäben und äußeren Lage von Leiterstäben durch die Kröpfung der jeweiligen ersten Leiterstabenden überbrückt. Gemäß einer Ausführungsform kann der radiale Abstand zwischen der radial inneren Lage und der radial äußeren Lage der Leiterstäbe der radiale Dicke eines Leiterstabs entsprechen. Weitere Abstande zwischen der radial inneren Lage und radial äußeren Lage sind ebenfalls denkbar und durch die mechanische Ausbildung, Ausgestaltung und/oder Ausrichtung der Kröpfung frei wählbar. Gemäß einer Ausführungsform kann der radiale Abstand der radial inneren Lage und der radial äußeren Lage der Leiterstäbe in Abhängigkeit von der dicke des Statorjochs, insbesondere der radialen Jochdicke, gewählt werden.

Gemäß einer Ausführungsform sind die Leiterstäbe ausgehend von dem ersten Leiterstabende jeweils über eine Strecke im Bereich von etwa 5% bis etwa 25%, bevorzugt etwa 10% bis etwa 20%, besonders bevorzugt etwa 12% bis etwa 18%, der gesamten Länge des jeweiligen Leiterstabs gekröpft geformt. Auf diese Weise verbleibt ein Großteil der Länge des jeweiligen Leiterstabs ungekröpft, was insbesondere bei der Handhabung der Leiterstäbe vorteilhaft ist.

Gemäß einer Ausführungsform ist die Kröpfung als ein doppeltes Abwinkeln ausgeführt. Auf diese Weise wird der radiale Abstand zwischen der radial inneren Lage und der radial äu-βeren Lage der Leiterstäbe anhand einer besonders kosteneffektiven Umformung überbrückt. Die Kröpfung kann dabei als entgegengesetzte doppelte Abwinklung ausgebildet sein. Die jeweiligen Abwinkelungen des Leiterstabs können Winkel zwischen 20° und 70° betragen, bevorzugt zwischen 30° und 60°, besonders bevorzugt zwischen 40° und 50°.

Gemäß einer alternativen Ausführungsform kann die Kröpfung der jeweiligen Leiterstabenden als eine doppelte abgerundete Abbiegung ausgebildet sein. Die Kröpfung kann dabei als entgegengesetzte doppelte abgerundete Abbiegung ausgebildet sein. Auf diese Weise kann eine Kröpfung mit einem im Wesentlichen s-förmigen Querschnitt bereitgestellt werden. Die Biegewinkel der Abbiegungen können zwischen 20° und 70° betragen, bevorzugt zwischen 30° und 60°, besonders bevorzugt zwischen 40° und 50°.

Gemäß einer Ausführungsform des Verfahrens werden nach dem Einführen die ersten Leiterstabenden die im Überlapp mit den zweiten Leiterstabenden liegen bei dem Fügen im Überlappstoß gefügt, insbesondere durch Laserstrahlschweißen. Auf diese Weise wird eine große Oberfläche und/oder eine hohe Werkstoffdicke für das Fügen der ersten und zweiten Leiterstabenden bereitgestellt. Die Schweißverbindung kann dabei, insbesondere abhängig vom Schweißverfahren, als Kehlnaht, Stumpfnaht oder Kombination aus Nahtarten ausgeführt sein. Ferner kann gemäß einer Ausführungsform der Überlappstoß der ersten Leiterstabenden und zweiten Leiterstabenden durch Elektronenstrahlschweißen gefügt sein. Auf diese Weise wird ein Schweißverfahren bereitgestellt mit einer hohen Wirtschaftlichkeit und hohen Flexibilität bei der Anwendung.

Gemäß einer Ausführungsform ist die Wicklung derart torsionssteif ausgelegt, dass ein im Betrieb einer Radialfluss-Doppelrotormaschine auf den Statorkern wirkendes Drehmoment über die torsionssteife Wicklung an dem Trägerelement, insbesondere vollständig, abstützbar ist. Auf diese Weise können vorteilhaft sämtliche andersartige Kraftabstützungseinrichtungen, insbesondere für den Statorkern, entfallen.

Gemäß einer Ausführungsform ist der Statorkern zur Führung eines vorrangig radialen Magnetflusses ausgebildet. Es handelt sich somit um eine sogenannte "jochlose" Ausführung des Statorkerns, die insbesondere eine Magnetflussführung in umfänglicher bzw. tangentialer Richtung vermeidet. Ein magnetischer Rückschluss im Statorkern ist dabei nicht erforderlich, wodurch Gewicht und Eisenverluste reduziert werden.

Gemäß einer Ausführungsform weist der Statorkern eine radiale Jochdicke auf, welche weniger als 30%, vorzugsweise weniger als 20%, besonders bevorzugt weniger als 10% einer gesamten radialen Statorkerndicke beträgt. Bei einer sogenannten "jochlosen" Ausführung wird auf diese Weise dennoch eine mechanische Verbindung der Statorzähne bereitgestellt, was elektromagnetisch jedoch nicht notwendig ist und worüber auch kein funktionsrelevanter Magnetfluss stattfindet. Der Begriff "jochlos" bezieht sich somit insbesondere auf die elektromagnetische Flussführung des Statorkerns.

Gemäß einer Ausführungsform weist die radial innere Lage und die radial äußere Lage der Wicklung jeweils die Stärke eines einzelnen Leiterstabes auf. Das heißt, eine Phase der Wicklung ist jeweils mit dem Querschnitt eines einzelnen Leiterstabs gebildet. Eine derartige erfindungsgemäße Ausbildung einer Wicklung ist unter anderem durch die spezielle Bauweise der Radialfluss-Doppelrotormaschine ermöglicht, welche die bei Leitern ansonsten vorhandene Stromverdrängung zur Oberfläche mittels ihrer magnetischen Symmetrie unterbindet. Auf diese Weise sind vergleichsweise dicke Leiterquerschnitte ermöglicht und es wird dennoch eine relativ gleichmäßige Stromverteilung über den Querschnitt erreicht. Beispielsweise kann die Dicke der Leiterstäbe im Bereich mehrerer Millimeter ausgebildet sein. Es kann sich insbesondere um Stäbe mit Vierkantprofil handeln mit Kantenlängen von mehreren Millimetern, beispielsweise im Bereich von 2 mm bis 6 mm, insbesondere im Bereich von 3 mm bis 5 mm. Andere Querschnittsformen sind ebenfalls möglich.

Gemäß einer Ausführungsform sind die Leiterstäbe entsprechend dem schraubenförmigen Verlauf jeweils derart tordiert ausgebildet, dass ein Querschnitt eines Leiterstabes bezogen auf eine radiale Achse des Querschnitts an jeder Stelle des Leiters gleich ist. Insbesondere handelt es sich um eine Torsion eines, insbesondere nichtrunden, Leiterstabs um die Mittelachse des Stators beziehungsweise der Maschine. Je nach Verlauf der Schraubenform können die Leiterstäbe zusätzlich auch gebogen sein. Die innere und die äußere Lage sind dabei zueinander verschränkt, das heißt entgegengesetzt verdreht, tordiert und gegebenenfalls gebogen, angeordnet. Auf diese Weise ist die Ausrichtung eines Leiterstabs unter mechanischen Gesichtspunkten an jeder Stelle des Statorkerns ideal zur Kraftübertragung mit dem Statorkern ausgerichtet, sodass der jeweilige Leiterstab über seine Länge gleichmäßig belastet wird. In dem entstehenden Stabwerk nehmen die Leiter bei Beaufschlagung mit Tangentialkraft somit vorteilhaft vorwiegend Zug- und Druckspannungen auf. Auf diese Weise werden Lastspitzen und Verformungen der Leiterstäbe vermieden. Insbesondere gegenüber einer Ausführung mit achsparallelen, geraden Leitern können die mechanischen Spannungen somit signifikant gesenkt werden.

Gemäß einer Ausführungsform sind die einer gleichen Phase der Wicklung zugehörigen Leiterstäbe der radial inneren und äußeren Lage jeweils an den Leiterstabenden miteinander verbunden, insbesondere über ein radial angeordnetes Leiterstabstück und/oder mittels stoffschlüssiger Verbindung. Hierdurch entsteht neben einer Leiterschlaufe auch eine torsionssteife stabwerkartige Struktur, so dass bei Fixierung eines axial zugänglichen Wicklungsendes ein hohes Drehmoment von der Wicklung aufgenommen werden kann, ohne unzulässig große Verformungen und/oder Spannungszustände hervorzurufen. Somit ist nur durch den Wicklungswerkstoff, beispielsweise Kupfer, ohne zusätzliche Trägermittel oder -elemente die selbsttragende Ausführung der Wicklung ermöglicht.

Gemäß einer Ausführungsform enthält der Statorkern ein Statorblechpaket mit dem Wicklungsverlauf entsprechend schraubenförmig verlaufenden Statornuten, wobei in jeder Statornut des Statorblechpakets ein einzelner Leiterstab angeordnet ist. Die Wicklung bzw. das damit gebildete selbsttragende Stabwerk ist somit in dem Statorblechpaket eingebettet. Analog zu den Leiterstäben der Wicklung ändern die Statornuten daher in Abhängigkeit von der axialen Position ihre tangentiale Lage, sodass die Schraubenform entsteht. Die Richtung der Lageänderung folgt dabei den Leiterstäben, d.h. die Mittellinie der radial außen liegenden Nuten und der radial innen liegenden Nuten beschreiben ebenfalls jeweils eine Schraubenlinie, deren Windungsrichtungen entgegengesetzt sind.

Bei weiteren Ausführungsformen wären auch andere dem Fachmann bekannte Herstellungsarten zur Herstellung der erfindungsgemäßen Statorkerngeometrie mit den entgegengesetzt schraubenförmig verlaufenden radial inneren und äußeren Statornuten denkbar, insbesondere auch additive Herstellungsarten, wie Sinterverfahren oder dergleichen.

Gemäß einer Ausführungsform ist in jeder Statornut des Statorblechpakets nur ein einziger Leiterstab platziert. Wie bereits in Bezug auf die Wicklung erläutert, sind die Leiterstäbe der innen und außen liegenden Statornuten durch Torsion um die Mittelachse der Maschine schraubenförmig gegeneinander verschränkt, so dass die Leiterenden der inneren und äußeren Lage zueinander geführt sind. An den Leiterstabenden sind die Leiterstäbe leitend miteinander verbunden, insbesondere über ein radial angeordnetes Leiterstabstück und/oder mittels stoffschlüssiger Verbindung, beispielsweise durch Schweißen oder Hartlöten.

Gemäß einer Ausführungsform bilden die leitfähig verbundenen Leiterstäbe der inneren und äußeren Lage gemeinsam wellenförmige Wicklungsstränge. Die Wicklungsstränge lassen sich durch entsprechende, dem Fachmann bekannte, Verschaltungen zu einer drehfelderzeugenden Wicklung mit einer gewünschten bzw. anpassbaren Strangzahl verschalten. Die spannungshaltende Strangwindungszahl ergibt sich unmittelbar aus dem Quotienten der Anzahl der Nuten im Zähler und einem Produkt der Strangzahl und der Anzahl paralleler Zweige im Zähler. Vorteilhafterweise wird die Anzahl paralleler Zweige zu 1 gewählt. In diesem Fall ergibt sich die einfachst mögliche Verschaltung der Wicklung.

Gemäß einer Ausführungsform sind die Statorbleche des Statorblechpakets mit zur Ausbildung der Statornuten vorgesehenen Ausnehmungen jeweils gleich ausgebildet. Der schraubenförmige Verlauf der Statornuten ist dabei mittels einer zueinander verdrehten Stapelung der Statorbleche vorgesehen. Auf diese Weise kann das Statorblechpaket auf sehr wirtschaftliche Weise gefertigt werden, da für alle parallel angeordneten bzw. gestapelten Statorbleche die gleiche Stanzform eingesetzt werden kann. Dementsprechend sind zwei benachbarte Statorbleche leicht zu einander um einen vorbestimmten Winkel um die Mittelachse verdreht, sodass die Ausnehmungen in einer Überlappung zueinander angeordnet sind, welche dem Schraubenlinienverlauf entspricht.

Gemäß einer vorteilhaften Ausführungsform enthält das Statorblechpaket ein inneres Teilpaket mit radial inneren Statornuten und ein äußeres Teilpaket mit radial äußeren Statornuten. Die Statorbleche des inneren Teilpakets sind dabei mit einer jeweils gleichen Geometrie und die Statorbleche des äußeren Teilpakets sind dabei mit einer jeweils gleichen Geometrie ausgeführt. Die Statorbleche des inneren Teilpakets und die Statorbleche des äußeren Teilpakets sind dabei gegensätzlich zueinander verdreht gestapelt. Auf diese Weise lassen sich mit geringem Fertigungsaufwand die entgegengesetzten Schraubenlinien der Statornuten realisieren. Dennoch ist eine nach wie vor sehr wirtschaftliche Fertigungsweise ermöglicht, da für alle parallel angeordneten bzw. gestapelten Statorbleche des inneren Teilpakets die gleiche Stanzform eingesetzt werden kann und für alle parallel angeordneten bzw. gestapelten Statorbleche des äußeren Teilpakets die gleiche Stanzform eingesetzt werden kann. Dementsprechend sind zwei benachbarte Statorbleche des inneren Teilpaktes in eine erste Richtung leicht zu einander um einen vorbestimmten Winkel um die Mittelachse verdreht und zwei benachbarte Statorbleche des äußeren Teilpaktes in eine zweite entgegengesetzte Richtung leicht zu einander um einen vorbestimmten Winkel um die Mittelachse verdreht. Auf diese Weise sind die Ausnehmungen der Statorbleche des inneren Teilpakets und die Ausnehmungen der Statorbleche des äußeren Teilpakets in einer entgegengesetzten Überlappung zueinander angeordnet, welche dem entgegengesetzten Schraubenlinienverlauf entspricht.

Gemäß einer weiteren Ausführungsform sind die Statorbleche mit zur Ausbildung der Statornuten vorgesehenen Ausnehmungen jeweils unterschiedlich ausgebildet. Der schraubenförmige Verlauf der Statornuten ist dabei mittels unterschiedlicher Abstände der Ausnehmungen in den einzelnen Statorblechen vorgesehen. Insofern wird hierbei für jede Position eines Statorblechs innerhalb des Stapels eine individuell passende Statorblechform hergestellt, wobei innerhalb des Stapels sich die einzelnen Geometrien auch wiederholen können. Die Herstellung kann in diesem Fall beispielsweise mittels eines hinsichtlich der Form im Vergleich zu einem Stanzprozess flexibleren Strahlschneidprozesses, insbesondere Laserstrahlschneidprozess, realisiert werden. Ebenfalls denkbar wären flexible Stanzformen mit veränderlicher Geometrie oder bei sehr hoher Stückzahl selbstverständlich auch mehrere individuelle Stanzformen für jede der unterschiedlichen Statorblechformen.

Gemäß einer Weiterbildung sind die Ausnehmungen für radial innere und radial äußere Statornuten jeweils in einem gemeinsamen Statorblech integriert ausgebildet, wobei der entgegengesetzt schraubenförmige Verlauf der radial inneren und radial äußeren Statornuten durch eine fortwährende Verschiebung der inneren und äußeren Statornuten zueinander von Statorblech zu Statorblech vorgesehen ist. Auch hierbei wird für jede Position eines Statorblechs innerhalb des Stapels eine individuell passende Statorblechform hergestellt, wobei innerhalb des Stapels sich die einzelnen Geometrien auch wiederholen können. Auch hier wird zu Herstellung insbesondere auf flexible Trennprozesse, wie beispielsweise Laserstrahlschneiden, zurückgegriffen. Durch die so mögliche einteilige Herstellung der inneren und äußeren Ausnehmungen wird vorteilhaft die Anzahl der Teile reduziert.

Gemäß einer Ausführungsform weisen die Statorbleche gerade, insbesondere gestanzte, Kanten auf. Eine Breite der für die Statornuten vorgesehenen Ausnehmungen ist dabei um einen durch die Steigung der Schraubenform des Verlaufs der Statornuten und durch die Blechstärke der Statorbleche vorbestimmten Betrag größer als die Breite der Leiterstäbe ausgebildet. Eine durch den Versatz zwischen den Ausnehmungen der Statorbleche verringerte lichte Breite bzw. durchgängige Breite der Statornuten entspricht somit im Wesentlichen der Breite eines Leiterstabs. In der Praxis ist die durchgängige lichte Breite der Statornut zur Bereitstellung einer zum Einführen der Leiterstäbe notwendigen Spielpassung geringfügig größer als die Breite des Leiterstabs vorgesehen. Der Rand einer Statornut beschreibt somit eine Treppenform mit der jeweiligen Blechstärke als Stufen, an welcher sich der Leiterstab gleichmäßig abstützt. Auf diese Weise wird die Drehmomentabstützung gleichmäßig über die gesamte Dicke des Statorblechpakets bzw. über die gesamte in dem Statorblechpaket aufgenommene Länge der Leiterstäbe ermöglicht.

Gemäß einer Ausführungsform ist ein von den Statornuten jeweils überstrichener Winkel kleiner als ein von den Leiterstäben jeweils überstrichener Winkel. Der überstrichene Winkel bezieht sich jeweils auf eine Drehung um die Mittelachse des Stators. Der Unterschied der überstrichenen Winkel kommt dadurch zustande, dass die Leiterstäbe axial über den Statorkern hinausstehen und somit länger ausgebildet sind als die Statornuten. Da sich der schraubenförmige Verlauf ebenfalls fortsetzt, ergibt sich ein größerer dadurch überstrichener Winkel. Der besagte Unterschied ist vorgesehen, damit eine ausreichende Zugänglichkeit der Wicklungsenden zum Verbinden, insbesondere Verschweißen, der Leiterstabenden nach dem Einführen in die Statornuten gewährleistet ist. Ferner ist auf diese Weise ein axial zu dem Statorkern versetztes Eingreifen der Wicklung mit der Trägereinrichtung bzw. deren Trägerelement ermöglicht.

Aus dem Quotienten der überstrichenen Winkel, also einem Verhältnis des von den Statornuten jeweils überstrichenen Winkels zu dem von den Leiterstäben jeweils überstrichenen Winkel, lässt sich ein sogenannter Polbedeckungsgrad für das Statorblechpaket definieren.

Gemäß einer Ausführungsform liegt ein Verhältnis des von den Statornuten jeweils überstrichenen Winkels zu dem von den Leiterstäben jeweils überstrichenen Winkel in einem Bereich zwischen 0.6 und 0.8, insbesondere zwischen 0,6 und 0,75, vorzugsweise zwischen 0,6 und 0,7. Dieses Verhältnis (Polbedeckungsgrad) stellt in diesem Bereich ein Optimum zwischen durch Stromwärme entstehenden Verlusten und Drehmomentausnutzung bereit.

Gemäß einer Ausführungsform weist die Trägereinrichtung ein Trägerelement auf, in welchem zu der schraubenförmigen Anordnung der Leiterstäbe korrespondierende und mit den Leiterstäben in Eingriff stehende Trägernuten vorgesehen sind. Auf diese Weise wird für die Abstützung des Drehmoments am axialen Ende eine formschlüssige Einbettung der Leiterstäbe in das Trägerelement vorgesehen. Vorzugsweise besteht ein Eingriff mit allen Leiterstäben, sodass die Drehmomentabstützung homogen bzw. gleichmäßig über das gesamte Stabwerk der Wicklung abgetragen wird.

Zur Übertragung des Drehmoments ist das Trägerelement mit einer mechanisch festgelegten Basis einer Radialfluss-Doppelrotormaschine koppelbar. Eine mögliche Ausführung sieht dazu Durchgangsbohrungen für kraftschlüssige Befestigungsmittel wie Schrauben vor, es wären aber selbstverständlich auch formschlüssige Verbindungsmittel oder eine stoffschlüssige Verbindung denkbar.

Gemäß einer Ausführungsform folgen die Trägernuten zumindest abschnittsweise dem schraubenförmigen Verlauf der tordierten Leiterstäbe. Insbesondere Weisen die Trägernuten einen gleichermaßen tordierten Verlauf wie die Leiterstäbe auf. Beispielsweise ist das Trägerelement im Wesentlichen ringförmig ausgebildet und weist Ausnehmungen an dem inneren und/oder äußeren Umfang auf, welche radial ausgerichtet sind und dem Verlauf der Leiterstäbe entsprechen.

Gemäß einer Ausführungsform weist die Trägereinrichtung ein radial inneres Trägerelement zum Eingriff mit der radial inneren Lage der Leiterstäbe und ein radial äußeres Trägerelement zum Eingriff mit der radial äußeren Lage der Leiterstäbe auf. Bei dieser Ausführungsform können die Trägerelemente ringförmig ausgebildet sein, wobei das innere Trägerelement an seinem äußeren Umfang dem Verlauf der inneren Lage der Leiterstäbe entsprechende Nuten bzw. Zähne zur formschlüssigen Aufnahme der radial inneren Leiterstäbe und das äußere Trägerelement an seinem inneren Umfang dem Verlauf der äußeren Lage der Leiterstäbe entsprechende Nuten bzw. Zähne zur formschlüssigen Aufnahme der radial äußeren Leiterstäbe aufweist. Die Nuten bzw. Zähne folgen dabei insbesondere dem jeweiligen schraubenförmigen Verlauf. Durch die Anordnung am inneren oder äußeren Umfang sind die eingelassenen Nuten für eine mechanische Bearbeitung gut zugänglich, was die Herstellung der Trägerelemente vereinfacht.

Gemäß einer Ausführungsform einer Radialfluss-Doppelrotormaschine sind die Trägerelemente an der Basis fixiert und führen das Drehmoment so zum festen Teil der elektrischen Maschine. Die Trägerelemente können dazu einzeln mit der Basis, beispielsweise einem Gehäuse, der Maschine befestigt sein. Alternativ oder zusätzlich können auch die inneren und äußeren Trägerelemente miteinander befestigt sein.

Gemäß einer Ausführungsform eines Stators enthält die Trägereinrichtung einen wärmeleitenden Werkstoff, insbesondere ein Metall, vorzugsweise eine Aluminiumlegierung. Insbesondere können beide Trägerelemente einen solchen Werkstoff enthalten. Auf diese Weise wird neben einer hohen mechanischen Festigkeit auch eine Wärmeabfuhr aus der Wicklung über die Trägereinrichtung ermöglicht.

Gemäß einer Ausführungsform einer entsprechenden Radialfluss-Doppelrotormaschine mit einer einen wärmeleitenden Werkstoff enthaltenden Trägereinrichtung weist zusätzlich die Basis einen Kühlkörper auf, der zur Aufnahme von über die Trägereinrichtung aus dem Stator, insbesondere aus der Wicklung, abgeführter Wärme ausgebildet ist. Hierdurch weist die Trägereinrichtung eine hohe mechanische Festigkeit auf und gewährleistet gleichzeitig eine gute thermische Anbindung der Wicklung an den Kühlkörper. Beispielsweise kann das Gehäuse der Maschine als Kühlkörper dienen. Alternativ oder zusätzlich kann die Trägereinrichtung, vorzugsweise die inneren und äußeren Trägerelemente, in thermischem Kontakt mit einem aktiv gekühlten Kühlkörper der Maschine stehen. Auf diese Weise können die in der Wicklung bzw. in den Leiterstäben entstehenden Stromwärmeverluste effektiv abgeführt werden.

Gemäß einer Ausführungsform einer Radialfluss-Doppelrotormaschine ist sowohl an dem ersten Rotor als auch an dem zweiten Rotor eine vorbestimmte Anzahl von Poolpaaren vorgesehen. Ein von den Leiterstäben jeweils überstrichener Winkel ist dabei zur Ausbildung einer Leiterschleife pro Pol der Rotoren ausgebildet. Der vorzusehende überstrichene Winkel lässt sich somit aus dem Quotienten aus einer ganzen Umdrehung (2π oder 360°) und der doppelten Polpaarzahl p errechnen.

Gemäß einer Ausführungsform des Verfahrens zur Herstellung umfasst das Bereitstellen des Statorkerns die Herstellung eines Statorblechpakets, wobei einzelne Statorbleche, welche Ausnehmungen zur Ausbildung von Statornuten aufweisen, zueinander verdreht gestapelt werden. Auf diese Weise kann das Statorblechpaket auf sehr wirtschaftliche Weise gefertigt werden, da für alle parallel angeordneten bzw. gestapelten Statorbleche die gleiche Stanzform eingesetzt werden kann. Dementsprechend sind zwei benachbarte Statorbleche leicht zu einander um einen vorbestimmten Winkel um die Mittelachse verdreht, sodass die Ausnehmungen in einer Überlappung zueinander angeordnet sind, welche dem Schraubenlinienverlauf entspricht. Die Herstellung der einzelnen Statorbleche mit einer solchen Geometrie erfolgt vorteilhafterweise durch Stanzen oder Laserstrahlschneiden von Einzellamellen aus Elektroblech.

Gemäß einer Weiterbildung des Verfahrens enthält das Statorblechpaket ein inneres Teilpaket und ein äußeres Teilpaket, wobei alle Statorbleche des inneren Teilpakets mit einer jeweils gleichen Geometrie und alle Statorbleche des äußeren Teilpakets mit einer jeweils gleichen Geometrie ausgebildet sind, und wobei die Statorbleche des inneren Teilpakets zur Ausbildung der innen liegenden Statornuten und die Statorbleche des äußeren Teilpakets zur Ausbildung der außen liegenden Statornuten zueinander entgegengesetzt verdreht gestapelt werden. In diesem Fall können alle Bleche des jeweils inneren und äußeren Pakets in derselben Geometrie ausgeführt sein, wodurch der Herstellungsprozess sehr wirtschaftlich wird. Für alle parallel angeordneten bzw. gestapelten Statorbleche des inneren Teilpakets kann somit die gleiche Stanzform eingesetzt werden kann und für alle parallel angeordneten bzw. gestapelten Statorbleche des äußeren Teilpakets kann die gleiche Stanzform eingesetzt werden. Zwei benachbarte Statorbleche des inneren Teilpaktes werden in eine erste Richtung leicht zu einander um einen vorbestimmten Winkel um die Mittelachse verdreht und zwei benachbarte Statorbleche des äußeren Teilpaktes werden in eine zweite Richtung leicht zu einander um einen vorbestimmten Winkel um die Mittelachse verdreht. Auf diese Weise werden die Ausnehmungen der Statorbleche des inneren Teilpakets und die Ausnehmungen der Statorbleche des äußeren Teilpakets in einer entgegengesetzten Überlappung zueinander angeordnet, welche dem entgegengesetzten Schraubenlinienverlauf entspricht. Auf diese Weise lassen sich mit geringem Fertigungsaufwand die entgegengesetzten Schraubenlinien der Statornuten realisieren.

Gemäß einer weiteren Ausführungsform des Verfahrens weist das Statorblechpaket eine Vielzahl unterschiedlich geformter Statorbleche auf, wobei die Ausnehmungen für die inneren und äußeren Statornuten jeweils in einem gemeinsamen Statorblech integriert sind, und wobei die Steigung der Schraubenlinie durch eine fortwährende Verschiebung der inneren und äußeren Statornuten zueinander von Statorblech zu Statorblech realisiert wird, insbesondere mit einem flexiblen Stanz- oder Laserstrahl-Trennprozess. Dabei werden innere und äußere Statornuten in einem einzigen Statorblech (Lamelle) integriert und der schraubenförmige Verlauf der Statornuten wird durch eine fortwährende Verschiebung der Ausnehmungen zueinander im Trennprozess, beispielswiese mittels eines flexiblen Stanzprozesses oder eines Laserstrahl-Trennprozess, in jedem Einzelblech herbeigeführt. Dies hat den Vorteil, dass mit weniger Teilen auch weniger Fertigungsschritte notwendig sind und das somit entstehende Statorblech bzw. der gesamte Statorkern eine höhere mechanische Festigkeit aufweist.

In einer weiteren Ausführungsform weist das Verfahren ferner den Schritt des Bereitstellens einer Trägereinrichtung, welche zum formschlüssigen Eingriff mit den Leiterstabenden an zumindest einem axialen Ende zur Drehmomentabstützung ausgebildet ist, und den Schritt des formschlüssigen In-Eingriff-Bringens der Trägereinrichtung mit den Leiterstabenden an dem zumindest einen axialen Ende an einer axial zu dem Statorkern versetzt angeordneten Position.

Mit einem auf diese Weise hergestellten Stator lässt sich gemäß einem Aspekt ferner ein Verfahren zur Herstellung einer Radialfluss-Doppelrotormaschine durchführen, mit den weiteren Schritten: Bereitstellen einer mechanisch festlegbaren Basis und einer Trägereinrichtung, welche zum formschlüssigen Eingriff mit der Wicklung an dem zumindest einen axialen Ende zur Drehmomentabstützung ausgebildet ist, und Befestigen der Trägereinrichtung mit der Basis.

Die obigen Ausgestaltungen und Weiterbildungen lassen sich, sofern sinnvoll, beliebig miteinander kombinieren. Insbesondere sind sämtliche Merkmale des Stators auf das Verfahren zur Herstellung eines Stators übertragbar, und umgekehrt. Ferner lassen sich sämtliche Merkmale des Stators auf eine entsprechende Radialfluss-Doppelrotormaschine sowie auf eine Fahrzeugachse mit derartiger Radialfluss-Doppelrotormaschine und/oder ein Fahrzeug mit derartiger Fahrzeugachse übertragen.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung, soweit diese vom Schutzumfang der beigefügten Ansprüche umfasst sind. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Explosionsdarstellung eines erfindungsgemäßen Stators mit zusammengebautem Statorkern und Trägereinrichtung;
- Fig. 2: eine Explosionsdarstellung des Stators gemäß Fig. 1;
- Fig. 3: eine Seitenansicht des Stators gemäß Fig. 2 mit zusammengebautem Statorkern und Trägereinrichtung;
- Fig. 4: eine Detailansicht eines Stators gemäß einer Ausführungsform;
- Fig. 5A-B: Detailansichten eines gekröpften Leiterstabs gemäß einer Ausführungsform;
- Fig. 6: eine schematische Längsschnittdarstellung eines Stators;
- Fig. 7: eine schematische Längsschnittdarstellung einer Radialfluss-Doppelrotormaschine;
- Fig. 8: eine Explosionsdarstellung einer Radialfluss-Doppelrotormaschine gemäß einer Ausführungsform;
- Fig. 9: eine Explosionsdarstellung eines Stators gemäß einer Ausführungsform;
- Fig. 10: eine Explosionsdarstellung einer Radialfluss-Doppelrotormaschine gemäß einer weiteren Ausführungsform;
- Fig. 11: eine perspektivische Darstellung der Radialfluss-Doppelrotormaschine gemäß Fig. 10 im montierten Zustand;
- Fig. 12: eine perspektivische Detailansicht einer Längsschnittdarstellung einer Radialfluss-Doppelrotormaschine gemäß einer weiteren Ausführungsform;
- Fig. 13: eine Explosionsdarstellung eines Statorblechpakets eines Statorkerns;
- Fig. 14: eine schematische Längsschnittdarstellung einer Statornut;
- Fig. 15: eine perspektivische Darstellung einer Wicklung;
- Fig. 16: eine Draufsicht einer Wicklung; und
- Fig. 17: ein Ablaufdiagramm eines Verfahrens zur Herstellung eines Stators.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

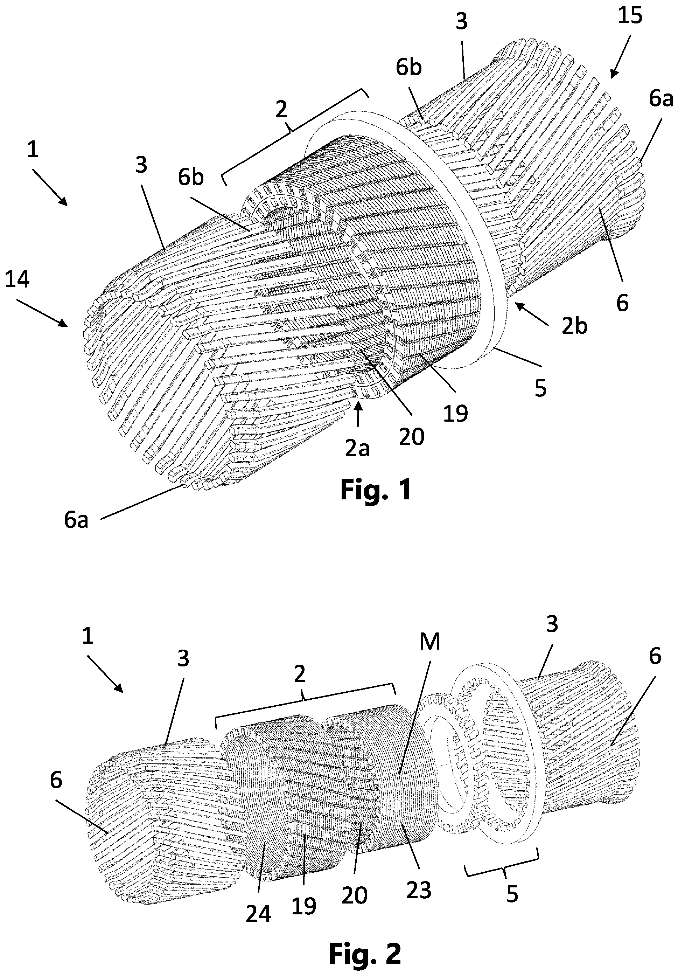

Fig. 1 zeigt eine Explosionsdarstellung eines erfindungsgemäßen Stators 1 mit zusammengebautem Statorkern 2 und Trägereinrichtung 5.

Der Stator 1 für eine Radialfluss-Doppelrotormaschine 10, insbesondere für einen Radnabenmotor, weist einen Statorkern 2 und eine in dem Statorkern 2 platzierten Wicklung 3 auf. Die Wicklung 3 ist zur Drehmomentabstützung des Stators 1 selbsttragend ausgeführt, wobei die Wicklung 3 an zumindest einem axialen Ende 4 über den Statorkern 2 hinausragt (nicht abgebildet).

Die Wicklung 3 ist aus miteinander verbundenen Leiterstäben 6 ausgebildet und weist eine radial innere Lage 15 von schraubenförmig angeordneten Leiterstäben 6 und eine radial äußere Lage 14 von entgegengesetzt schraubenförmig angeordneten Leiterstäben 6 auf. Die Leiterstäbe 6 sind jeweils an einem ersten Leiterstabende 6a gekröpft und an einem zweiten Leiterstabende 6b ungekröpft ausgebildet.

Die Explosionsdarstellung des Stators 1 von Fig. 1 soll die einzelnen Komponenten des Stators 1 zum Zwecke der verbesserten Übersichtlichkeit zeigen. Dabei sind beispielsweise die Leiterstäbe 6 der Wicklung 3 in die radial innere Lage 15 und radial äußere Lage 14 aufgeteilt abgebildet.

Der Stator 1 weist ferner eine axial zu dem Statorkern 2 versetzt angeordnete Trägereinrichtung 5, welche zum formschlüssigen Eingriff mit der Wicklung 3 an dem zumindest einen axialen Ende 4 (nicht abgebildet) zur Drehmomentabstützung ausgebildet ist.

Wie in Fig. 1 gezeigt sind die ersten Leiterstabenden 6a der Leiterstäbe 6 der radial äußeren Lage 14 derart angeordnet, dass die Kröpfung jeweils nach radial innen ausgerichtet ist. Ferner sind die ersten Leiterstabenden 6a der Leiterstäbe 6 der radial inneren Lage 15 derart angeordnet, dass die Kröpfung jeweils nach radial außen ausgerichtet ist.

Die Leiterstäbe 6 der radial äußeren Lage 14 sind in äußeren Statornuten 19 aufgenommen und mit dem ersten Leiterstabende 6a an einem ersten axialen Ende 2a des Statorkerns 2 angeordnet. Der schraubenförmige Verlauf der Leiterstäbe 6 der radial äußeren Lage 14 korrespondiert mit dem schraubenförmigen Verlauf der äußeren Statornuten 19.

Die Leiterstäbe 6 der radial inneren Lage 15 sind in inneren Statornuten 20 aufgenommen und mit dem ersten Leiterstabende 6 an einem zweiten axialen Ende 2b des Statorkerns 2 angeordnet. Der schraubenförmige Verlauf der Leiterstäbe 6 der radial inneren Lage 15 korrespondiert mit dem schraubenförmigen Verlauf der inneren Statornuten 20.

Ferner ist das erste axialen Ende 2a entgegengesetzt zum zweiten axialen Ende 2b in Bezug auf eine axiale Mitte des Statorkern 2 angeordnet.

Zusätzlich sind zur Ausbildung von Leiterschleifen an dem ersten axialen Ende 2a jeweils die ersten Leiterstabenden 6a der Leiterstäbe 6 der radial äußeren Lage 14 mit den zweiten Leiterstabenden 6b der Leiterstäbe 6 der radial inneren Lage 15 gefügt, und an dem zweiten axialen Ende 2b jeweils die ersten Leiterstabenden 6a der Leiterstäbe 6 der radial inneren Lage 15 mit den zweiten Leiterstabenden 6b der Leiterstäbe 6 der radial äußeren Lage 14 gefügt.

Fig. 2 zeigt eine Explosionsdarstellung des Stators 1 gemäß Fig. 1.

Fig. 2 zeigt den in Fig. 1 abgebildeten erfindungsgemäßen Stator 1, wobei der Statorkern 2 in das innere Teilpaket 23 und äußere Teilpaket 24 von Statorblechen aufgeteilt ist. In dieser Ansicht ist der jeweilige schraubenförmige Verlauf der Leiterstäbe 6 der radial innere Lage 15 und radial äußere Lage 14 und Statornuten 19, 20 eindeutig gezeigt. Ferner sind wie in Fig. 2 angezeigt sämtliche Komponenten coaxial um die Mittelachse M angeordnet.

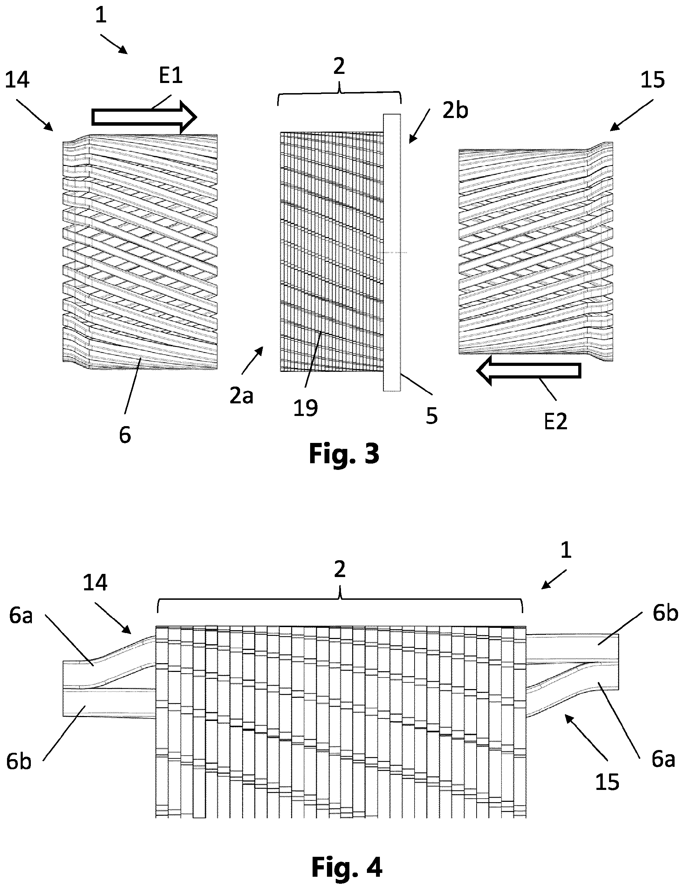

Fig. 3 zeigt eine Seitenansicht des Stators 1 gemäß Fig. 1 mit zusammengebautem Statorkern 2 und Trägereinrichtung 5.

Die Leiterstäbe 6 der radial inneren Lage 15 und die Leiterstäbe 6 der radial äußeren Lage 14 der Wicklung 3 sind jeweils entgegengesetzt axial versetzt zum Statorkern 2 und der Trägereinrichtung 5 dargestellt.

Anhand Fig. 3 lässt sich das Verfahren zur Herstellung eines Stators 1 für eine Radialfluss-Doppelrotormaschine 10 darstellen.

Das Verfahren beinhaltet den Schritt des Bereitstellens eines Statorkerns 2 mit jeweils eine Schraubenlinie beschreibenden radial außenliegenden Statornuten 19 und jeweils eine Schraubenlinie mit entgegengesetzter Windungsrichtung beschreibenden radial innen liegenden Statornuten 20 (nicht angezeigt, bzw. verdeckt).

Ferner beinhaltet das Verfahren den Schritt des Bereitstellens von einzelnen Leiterstäben 6, die an einem ersten Leiterstabende 6a gekröpft und an einem zweiten Leiterstabende 6b ungekröpft ausgebildet sind.

Zusätzlich beinhaltet das Verfahren den Schritt des Einführens der einzelnen Leiterstäbe 6 der radial äußeren Lage 14 an einem ersten axialen Ende 2a des Statorkerns 2 in die radial äußeren Statornuten 19, derart, dass an dem ersten axialen Ende 2a die Kröpfung der ersten Leiterstabenden 6a der Leiterstäbe 6 der radial äußeren Lage 14 nach radial innen ausgerichtet ist. Dabei zeigt Einführungsrichtung E1 die axiale Richtung, in die die Leiterstäbe 6 der radialen äußeren Lage 14 in die Statornuten 19 des Statorkerns 2 eingeführt werden.

Ferner beinhaltet das Verfahren den Schritt des Einführens der einzelnen Leiterstäbe 6 der radial inneren Lage 15 an einem zweiten axialen Ende 2b des Statorkerns 2 in die radial inneren Statornuten 20, derart, dass an dem zweiten axialen Ende 2b die Kröpfung der ersten Leiterstabenden 6a der Leiterstäbe 6 der radial inneren Lage 15 nach radial außen ausgerichtet ist. Dabei zeigt Einführungsrichtung E2 die axiale Richtung, in die die Leiterstäbe 6 der radialen inneren Lage 15 in die Statornuten 20 des Statorkerns 2 eingeführt werden.

Ferner beinhaltet das Verfahren den Schritt des Fügens der in die inneren und äußeren Statornuten 19, 20 eingeführten Leiterstäbe 6 an den Leiterstabenden 6a, 6b zur Ausbildung von Leiterschleifen. Hierbei werden an dem ersten axialen Ende 2a des Statorkerns 2 jeweils die ersten Leiterstabenden 6a der Leiterstäbe 6 der radial äußeren Lage 14 mit den zweiten Leiterstabenden 6b der Leiterstäbe 6 der radial inneren Lage 15 und an dem zweiten axialen Ende 2b des Statorkerns 2 jeweils die ersten Leiterstabenden 6a der Leiterstäbe 6 der radial inneren Lage 15 mit den zweiten Leiterstabenden 6b der Leiterstäbe 6 der radial äußeren Lage 14 gefügt.

Fig. 4 zeigt eine Detailansicht eines Stators 1 gemäß einer Ausführungsform.

Zur Ausbildung von Leiterschleifen sind jeweils die ersten Leiterstabenden 6a der Leiterstäbe 6 der radial äußeren Lage 14 mit den zweiten Leiterstabenden 6b der Leiterstäbe 6 der radial inneren Lage 15 gefügt. Dementsprechend und wie in Fig. 4 gezeigt sind jeweils die ersten Leiterstabenden 6a der Leiterstäbe 6 der radial inneren Lage 15 mit den zweiten Leiterstabenden 6b der Leiterstäbe 6 der radial äußeren Lage 15 gefügt und die ersten Leiterstabenden 6a der Leiterstäbe 6 der radial äußeren Lage 14 mit den zweiten Leiterstabenden 6b der Leiterstäbe 6 der radial inneren Lage 15 gefügt.

Die jeweiligen ersten Leiterstabenden 6a sind mit den jeweiligen zweiten Leiterstabenden 6b im Überlappstoß gefügt. Wie in Fig. 4 dargestellt bilden die Leiterstäbe 6 der radial inneren Lage 15 und radial äußeren Lage 14 auf gegenüberliegenden axialen Enden 2a, 2b jeweils Überlappstöße. Der jeweilige Überlappstoß kann insbesondere durch Laserstrahlschweißen gefügt werden.

Ferner ist ersichtlich, dass eine radiale Tiefe der Kröpfung jeweils einem radialen Abstand der radial inneren Lage 15 und der radial äußeren Lage 14 der Leiterstäbe 6 innerhalb des Statorkerns 2 entspricht.

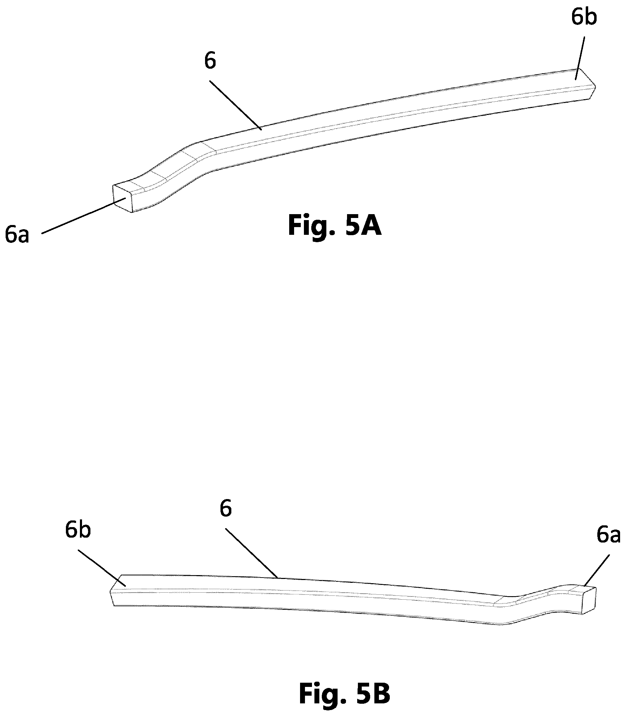

Fig. 5A und 5B zeigen Detailansichten eines gekröpften Leiterstabs 6 gemäß einer Ausführungsform.

Die Leiterstäbe 6 sind ausgehend von dem ersten Leiterstabende 6a jeweils über eine Strecke im Bereich von etwa 5% bis etwa 25%, bevorzugt etwa 10% bis etwa 20%, besonders bevorzugt etwa 12% bis etwa 18%, der gesamten Länge des jeweiligen Leiterstabs 6 gekröpft geformt. Die in Fig. 5A und Fig. 5B abgebildeten Leiterstäbe 6 sind ausgehend von dem ersten Leiterstabende 6a über eine Strecke von etwa 15% der gesamten Länge des Leiterstabs 6 gekröpft geformt.

Die Kröpfung der Leiterstabenden 6a der Leiterstäbe 6 ist als doppelt abgerundete Abbiegung geformt. Ferner ist der jeweilige abgebildete Leiterstab 6 entlang seiner Längsachse verdreht, insbesondere tordiert, ausgebildet.

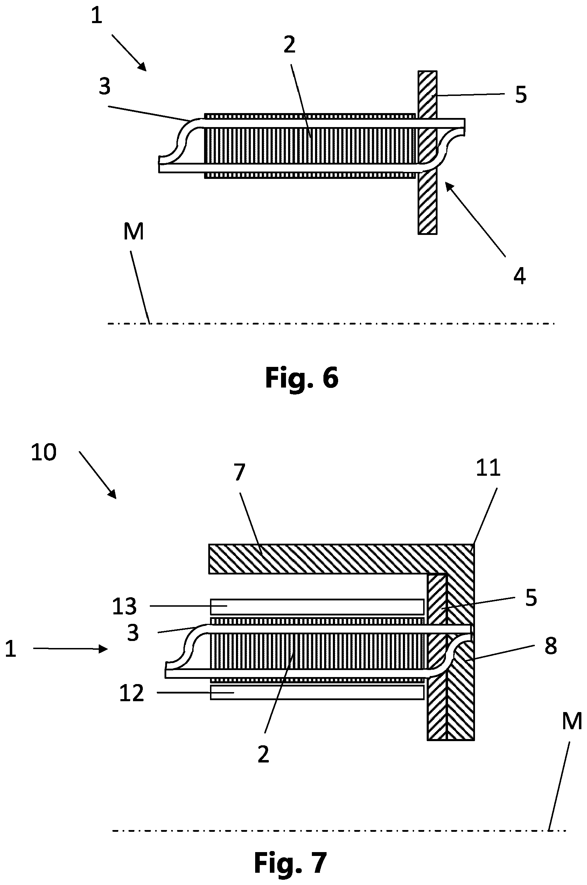

Fig. 6 zeigt eine schematische Längsschnittdarstellung eines Stators 1.

Es handelt sich hierbei um eine Prinzipskizze eines Stators 1 für eine Radialfluss-Doppelrotormaschine 10 (siehe dazu beispielsweise Fig. 1), insbesondere für einen Radnabenmotor. Der Stator weist einen Statorkern 2, eine Wicklung 3 und eine Trägereinrichtung 5 auf. Der Statorkern 2, die Wicklung 3 und die Trägereinrichtung 5 sind rotationssymmetrisch um die eingezeichnete Mittelachse M aufgebaut.

Die Wicklung 3 ist zur Drehmomentabstützung des Stators 1 selbsttragend ausgeführt und ragt an zumindest einem axialen Ende 4 über den Statorkern 2 hinaus. Die Trägereinrichtung 5 ist axial zum Statorkern 2 versetzt angeordnet und ist formschlüssig mit der Wicklung 3 an zumindest einem axialen Ende 4 zur Drehmomentabstützung verbunden. Auf diese Weise kann ein an dem Statorkern 2 im Betrieb einer Radialfluss-Doppelrotormaschine 10 anstehendes Drehmoment mittels der selbsttragenden Wicklung 3 an der Trägereinrichtung 5 abgestützt werden.

Die Wicklung 3 enthält ein Leitermaterial mit geringem elektrischem Widerstand, vorzugsweise Kupfer. Der Statorkern 2 ist bevorzugt aus einem weichmagnetischen Material zur magnetischen Flussführung aufgebaut. Die Trägereinrichtung 5 enthält vorzugsweise ein wärmeleitendendes Material, beispielsweise eine Aluminiumlegierung. Selbstverständlich ist die Wicklung 3 elektrisch isoliert.

Fig. 7 zeigt eine schematische Längsschnittdarstellung einer Radialfluss-Doppelrotormaschine 10.

Auch hierbei handelt es sich um eine rein illustrative Prinzipskizze. Die Radialfluss-Doppelrotormaschine 10 weist demnach zusätzlich zu dem Stator 1 gemäß Fig. 6 eine mechanisch festgelegte Basis 11, einen ersten Rotor 12 und einen zweiten Rotor 13 auf. Der Statorkern 2, die Wicklung 3, die Trägereinrichtung 5, die Basis 11, der erste Rotor 12 und der zweite Rotor 13 sind ebenfalls rotationssymmetrisch um die eingezeichnete Mittelachse M aufgebaut.

Die Wicklung 3 ist zur Drehmomentabstützung des Stators 1 selbsttragend ausgeführt und ragt an zumindest einem axialen Ende 4 über den Statorkern 2 hinaus und ist über die Trägereinrichtung 5 an der Basis 11 abgestützt. Die Trägereinrichtung 5 ist dazu axial zum Statorkern 2 versetzt angeordnet und ist formschlüssig mit der Wicklung 3 an zumindest einem axialen Ende 4 zur Drehmomentabstützung verbunden. Die Trägereinrichtung 5 ist wiederum mit der Basis 11 befestigt, sodass das Drehmoment über die Trägereinrichtung 5 an der Basis 11 abstützbar ist.

Der erste Rotor 12 ist radial innerhalb des Statorkerns 2 und der zweite Rotor 13 ist radial außerhalb des Statorkerns 2 angeordnet. Die Basis 11 kann beispielsweise als Gehäuse der Maschine ausgebildet sein und umfasst hier rein illustrativ eine in der Längsschnittdarstellung als L-förmig ausgebildete Struktur, die mit zwei Schenkeln 7, 8 dargestellt ist. Die Darstellung ist nicht als abschließend zu verstehen, vielmehr kann die Basis 11 weitere Komponenten und/oder strukturelle Abschnitte aufweisen. Der erste Schenkel 8 verläuft im Wesentlichen radial, der zweite Schenkel 7 im Wesentlichen axial mit dem größten Abstand zur Mittelachse M.

Rein schematisch ist die Trägereinrichtung 5 radial verlaufend einteilig dargestellt, sie kann aber auch mehrteilig und/oder mit einer anderen zum Formschluss mit der Wicklung 3 ausgebildeten Geometrie vorgesehen sein. Der dargestellte Überlapp der Wicklung 3 mit der Basis 11 ist rein der illustrativen schematischen Darstellung geschuldet und bedeutet keine direkte Verbindung. Die Wicklung 3 ist vorzugsweise über die Trägereinrichtung 5 mit der Basis 11 zur Drehmomentabstützung verbunden.

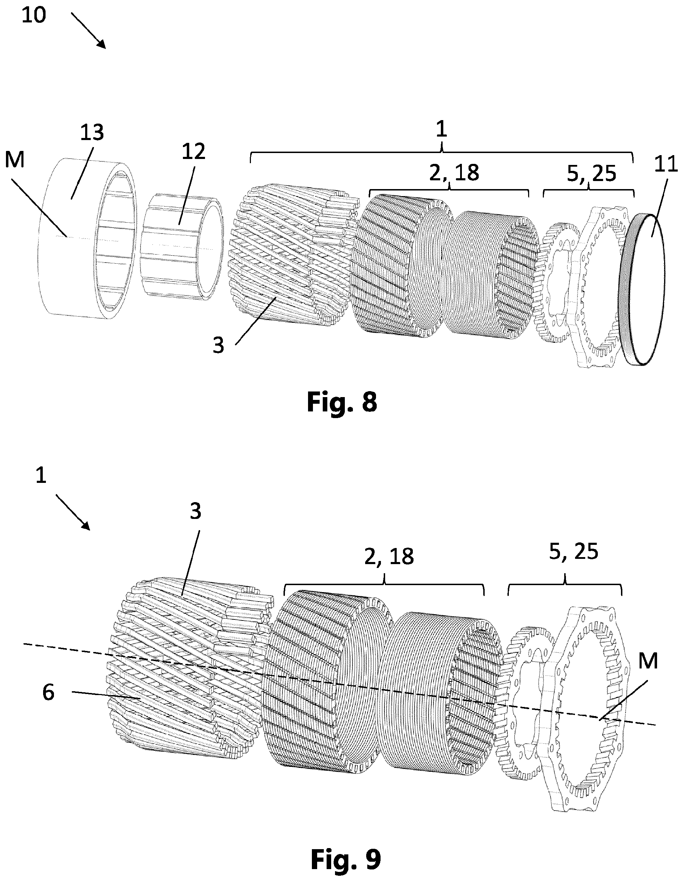

Fig. 8 zeigt eine Explosionsdarstellung einer Radialfluss-Doppelrotormaschine 10 gemäß einer Ausführungsform.

Die Radialfluss-Doppelrotormaschine 10 weist, zusätzlich zu den Komponenten des Stators 1, einen ersten Rotor 12, zweiten Rotor 13 und eine Basis 11 auf. Der erste Rotor 12 ist radial innerhalb des Statorkerns 2 angeordnet und der zweite Rotor 13 ist radial außerhalb des Statorkerns 2 angeordnet. Die Rotoren 12, 13 sind bevorzugt aus einem weichmagnetischen Vollmaterial gefertigt und an der jeweiligen dem Statorkern 2 zugewandten Oberfläche mit Permanentmagneten, sogenannten Oberflächenmagneten, als Pole besetzt. Bei weiteren Ausführungsformen können auch andere dem Fachmann bekannte Rotoren eingesetzt werden, beispielsweise mit vergrabenen Magneten, Kurzschlussläufer oder elektrisch erregte Läufer.

Die Basis 11 ist hier zur besseren Übersichtlichkeit lediglich schematisch dargestellt. Wie in der Beschreibung von Fig. 7 bereits beschrieben, ist die Basis 11 im montierten Zustand mit der Trägereinrichtung 5 befestigt. Die Basis 11 ist mechanisch gegenüber einem Bezugssystem, beispielsweise einem Träger einer Fahrzeugachse, festgelegt.

Fig. 9 zeigt eine Explosionsdarstellung eines Stators 1 gemäß einer Ausführungsform.

Der Stator 1 weist eine Wicklung 3, einen Statorkern 2 und eine Trägereinrichtung 5 auf, wobei hier eine vorteilhafte beispielhafte Ausführung dieser Komponenten genauer perspektivisch dargestellt ist.

Die Wicklung 3 ist aus einer inneren und äußeren Lage mit mehreren miteinander stabwerkartig verbundenen Leiterstäben 6 aufgebaut. Die Leiterstäbe 6 in den inneren und äußeren Lagen 14, 15 sind einander entgegengesetzt schraubenförmig angeordnet.

Die Dicke der inneren und äußeren Lage 14, 15 kann jeweils der Dicke eines Leiterstabs 6 entsprechen. Das heißt, die Wicklung 3 ist durch eine einzige die Leiterschlaufe bildenden Leiterschicht mit einem vergleichsweise großen Querschnitt in Form jeweils eines Leiterstabs 6 gebildet.

Durch die mit den Leiterstäben 6 gebildete Stabwerkstruktur ist die Wicklung 3 torsionssteif und dadurch zur Drehmomentabstützung selbsttragend ausgebildet.

Die Leiterstäbe 6 bilden dementsprechend wellenförmige Wicklungsstränge und lassen sich durch entsprechende, dem Fachmann bekannte und daher nicht weiter beschriebene Verschaltungen, wie beispielsweise Dreieckschaltung, Sternschaltung oder dergleichen, zu einer drehfelderzeugenden Wicklung beliebiger Strangzahl verschalten.

In der dargestellten Ausführungsform sind der Statorkern 2 und die Trägereinrichtung 5 beispielhaft jeweils aus zwei Komponenten aufgebaut. Für den Zusammenbau des Stators 1 werden die Wicklung 3, der Statorkern 2 und die Trägereinrichtung 5 ineinander verschachtelt angeordnet. Die Komponenten sind nach Zusammenbau koaxial zueinander ausgerichtet an der gemeinsamen Mittelachse M. Die hier beispielhaft zweiteilige Trägereinrichtung 5 ist axial versetzt zu den anderen Komponenten angeordnet und bildet die radial innerste und äußerste Komponente des Stators 1. Es handelt sich um einen inneren Ring und einen äußeren Ring, die jeweils mit Nuten zum formschlüssigen Eingriff mit den Leiterstäben 6 ausgebildet sind.

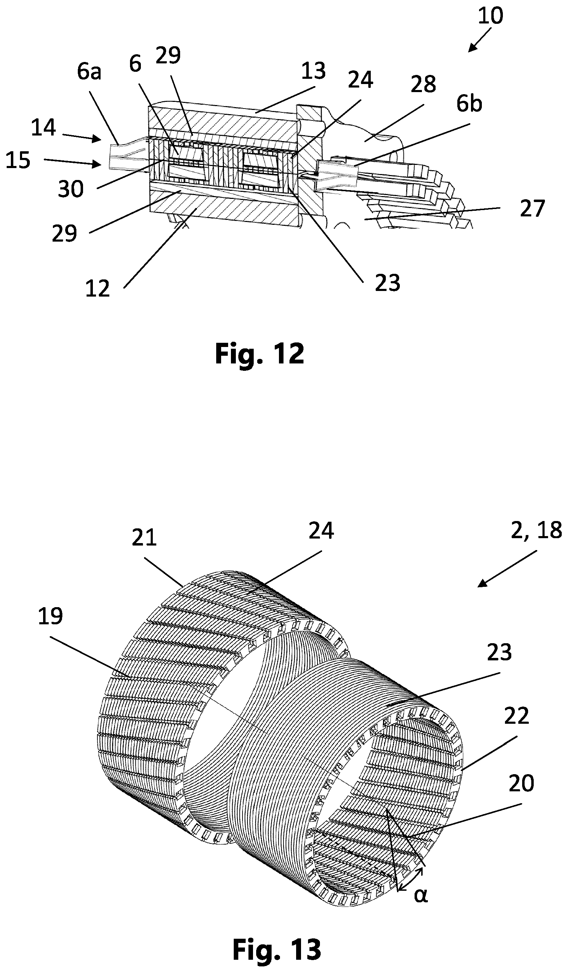

Der hier beispielhaft zweiteilige Statorkern 2 ist mit zwei schraubenförmig gegeneinander verdrehten Statorblechpaketen 18 gebildet, worauf in Bezug auf Fig. 13 weiter im Detail eingegangen wird.

Der Statorkern 2 und die Trägereinrichtung 5 können bei weiteren Ausführungsformen jeweils auch einteilig oder mit mehr als zwei Teilen ausgeführt werden.

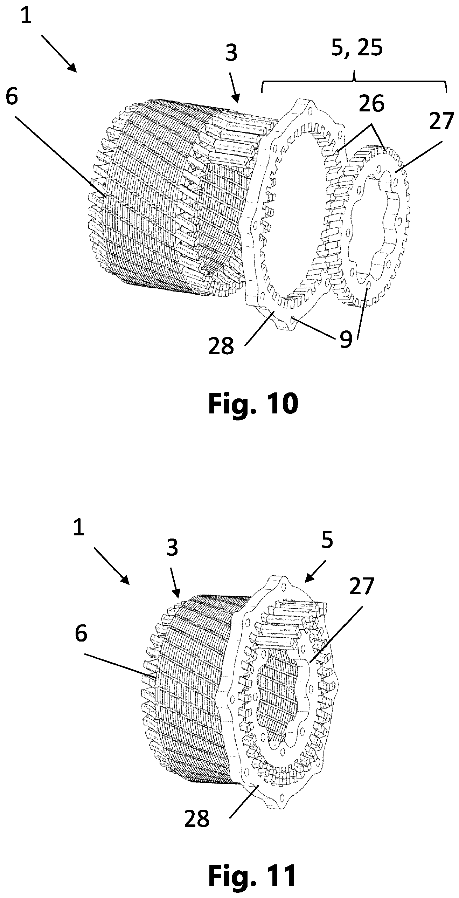

Fig. 10 zeigt eine Explosionsdarstellung eines Stators 1 gemäß einer weiterer Ausführungsform.

Der Stator 1 weist hier im Wesentlichen gleiche Komponenten auf, wie in Bezug auf Fig. 9 ausgeführt. An der linken Seite von Fig. 10 sind im zusammengebauten Zustand der Statorkern 2 und die Wicklung 3 dargestellt. Ferner können der erste Rotor 12 radial innerhalb des Statorkerns 2 und der zweite Rotor 13 radial außerhalb des Statorkerns 2 angeordnet sein (nicht gezeigt).

Die rechts dargestellte Trägereinrichtung 5 ist ebenfalls zweiteilig ausgeführt und unterscheidet sich durch die Ausgestaltung des jeweils ringförmigen inneren Trägerelements 27 und äußeren Trägerelements 28. Die Trägerelemente 27, 28 sind hier mit Trägernuten 26 ausgestattet. Diese sind bei dem äußeren Trägerelement 28 am inneren Umfang und bei dem inneren Trägerelement 27 am äußeren Umfang zum Eingriff mit den Leiterstäben 6 der Wicklung 3 vorgesehen.

Die Trägernuten 26 sind dazu entsprechend dem schraubenförmigen Verlauf der Leiterstäbe 6 bzw. dessen Steigung axial angewinkelt ausgebildet, so dass sie mit den Leiterstäben 6 der Wicklung 3 in Eingriff gebracht werden können.

Die Trägerelemente 27, 28 sind bevorzugt aus einem leitenden Metall hergestellt, besonders bevorzugt aus einer Aluminiumlegierung. Die zweiteilige Ausführung der Trägerelemente 27, 28 ermöglich es, dass die Trägernuten 26 in der Herstellung für eine mechanische bzw. spanende Bearbeitung leicht zugänglich sind.

Das innere Trägerelement 27 und das äußere Trägerelement 28 sind jeweils umlaufend mit mehreren Bohrungen 9 zur Befestigung mit der Basis 11 versehen. Die Bohrungen 9 sind hier beispielhaft jeweils entlang eines Lochkreises gleichmäßig am Umfang verteilt angeordnet. Die einzelnen Bohrungen 9 befinden sich etwas außerhalb des Hauptkörpers der Trägerelemente und die Trägerelemente 27, 28 bilden daher an dem jeweils der Wicklung abgewandten Umfang eine Sternform aus. Selbstverständlich sind andere Verteilungen der Bohrungen 9 wie auch andere Arten von Befestigungsmittel für die Verbindung zur Basis 11 denkbar.

Fig. 11 zeigt eine perspektivische Darstellung eines Stators 1 gemäß Fig. 10 im montierten Zustand.

Die Trägereinrichtung 5 wird über die jeweiligen Bohrungen 9 beispielsweise in einem Maschinengehäuse als Basis 11 (nicht abgebildet) befestigt und führt so das Drehmoment zum mechanisch festgelegten Teil der Radialfluss-Doppelrotormaschine 10 (nicht abgebildet). Auf diese Weise kann das durch die Radialfluss-Doppelrotormaschine 10 erzeugte Drehmoment effektiv abgestützt werden. Die Befestigung der Trägereinrichtung 5 wird über entsprechende Befestigungsmittel (nicht abgebildet), beispielsweise Schrauben, realisiert.

Die Leiterstäbe 6 der Wicklung 3 erstrecken sich axial an beiden Seiten bis außerhalb des Statorkerns 2 und des ersten und zweiten Rotors 12, 13. Die schraubenförmig angeordneten Leiterstäbe 6 der radial inneren Lage 15 und äußeren Lage 14 sind jeweils außerhalb des Statorkerns 2 miteinander gefügt.

Die Trägerelemente 27, 28 sind hier im Eingriff mit den Leiterstäben 6 der Wicklung 3 dargestellt. Es ist ersichtlich, dass in jeder Trägernut 26 ein Leiterstab 6 platziert ist, sodass alle Leiterstäbe 6 formschlüssig mit der Trägereinrichtung 5 gekoppelt sind. Somit kann ein über die Wicklung 3 abgestütztes Drehmoment über die Trägereinrichtung 5 an der an den Bohrungen 9 befestigten Basis 11 abgestützt werden.

Fig. 12 zeigt eine perspektivische Detailansicht einer Längsschnittdarstellung einer Radialfluss-Doppelrotormaschine 10 gemäß einer weiteren Ausführungsform.

Diese Ausführungsform entspricht im Wesentlichen dem Zusammenbau einer Radialfluss-Doppelrotormaschine 10 gemäß Fig. 8, auf deren Komponenten nachfolgend im Einzelnen weiter eingegangen wird.

Der Statorkern 2 weist ein inneres Teilpaket 23 und ein äu-βeres Teilpaket 24 auf. Die Teilpakete 23, 24 verlaufen ringförmig zwischen dem ersten und zweiten Rotor 12,13. Aufgrund der Schnittdarstellung ist es auch, möglich die inneren und äußeren Lagen 14, 15 der innerhalb der Teilpakete 23, 24 verlaufenden Leiterstäbe 6 zu sehen. Ferner ist auch ersichtlich, dass die Leiterstäbe 6 jeweils an einem ersten Leiterstabende 6a gekröpft und an einem zweiten Leiterstabende 6b ungekröpft ausgebildet sind. Dabei sind die ersten Leiterstabenden 6a der Leiterstäbe 6 der radial äußeren Lage 14 derart angeordnet, dass die Kröpfung jeweils nach radial innen ausgerichtet ist, und die ersten Leiterstabenden 6a der Leiterstäbe 6 der radial inneren Lage 15 derart angeordnet, dass die Kröpfung jeweils nach radial außen ausgerichtet ist.

Bei der dargestellten Radialfluss-Doppelrotormaschine 10 handelt es sich um eine sogenannte "jochlose" Ausführung bei der das Joch zwischen zwei Zähnen nicht im funktionsrelevanten magnetischen Fluss liegt. Zwischen den Leiterstäben 6 verläuft somit zwar ein Statorjoch 30, welches aber lediglich dem mechanischen Zusammenhalt des Statorblechpakets 18 dient. Entsprechend dünn kann eine radiale Jochdicke gestaltet werden, welche in der dargestellten Ausführungsform beispielhaft etwa 10% der gesamten radialen Statordicke beträgt. Mit der vergleichsweise geringen Jochdicke wird zusätzlich unerwünschter magnetischer Streufluss im Joch reduziert. Bei weiteren Ausführungsformen kann zu diesem Zweck die radiale Jochdicke weniger als 30%, vorzugsweise weniger als 20%, besonders bevorzugt weniger als 10% der gesamten radialen Statordicke betragen.

Die Trägereinrichtung 5 weist auch hier ein inneres Trägerelement 27 und ein äußeres Trägerelement 28 auf. Die Trägerelemente 27,28 sind hier gut erkennbar axial versetzt zu dem Stator 5 und den Rotoren 12,13 angeordnet. Ferner ist wenigstens abschnittsweise der formschlüssige Eingriff der Trägerelemente 27,28 mit den Leiterstäben 6 der inneren und äußeren Lagen 14, 15 erkennbar.

Ferner ist in der dargestellten Ausführungsform gut zu erkennen, dass die ersten Leiterstabenden 6a mit den zweiten Leiterstabenden 6b im Überlappstoß gefügt sind. Die Verbindung ist vorzugsweise als stoffschlüssige Verbindung realisiert, beispielsweise durch Laserstrahlschweißen.

Im Schnitt sind ferner die Oberflächenmagnete 29 der Rotoren 12, 13 zu erkennen. Der erste Rotor 12 hat auf seiner äußeren Umfangsfläche mehrere Permanentmagnete 29 montiert. Der zweiter Rotor 13 hat auf seiner inneren Umfangsfläche mehrere Permanentmagnete 29 montiert.

Eine besonders vorteilhafte Ausführungsform ergibt sich, wenn die Rotoren aus weichmagnetischem Vollmaterial und mit oberflächenmontierten Permanentmagneten ausgeführt sind. In dieser Ausführung können die Rotoren sehr kostengünstig gefertigt und ein hoher Wirkungsgrad erreicht werden.

Fig. 13 zeigt eine Explosionsdarstellung des Statorblechpakets 18 des Statorkerns 2.

Das Statorblechpaket 18 des Statorkerns 2 weist, wie bereits erwähnt, ein inneres Teilpaket 23 und ein äußeres Teilpaket 24 auf. Dies dient der einfacheren Herstellung der gegensätzlich zueinander verdrehten Statornuten 19, 20 mit gleichen zueinander verdreht gestapelten und an den gleichen Stellen mit Ausnehmungen versehenen inneren und äußeren Statorblechen 21, 22.

Bei weiteren Ausführungsformen können die Statorbleche auch einteilig ausgeführt sein, sodass eine Vielzahl unterschiedlich geformter Statorbleche mit unterschiedlich angeordneten Ausnehmungen vorgesehen und in der zur Ausbildung der Statornuten nötigen Reihenfolge gestapelt sind. Bei noch weiteren Ausführungsformen sind auch komplett einteilige Statorkerne 2 denkbar, die beispielsweise additiv gefertigt werden können.

Bei der dargestellten zweiteiligen Ausführung ist ein Innendurchmesser des äußeren Teilpakets 24 nahezu gleich mit dem Außendurchmesser des inneren Teilpakets 23. Dies ermöglicht es, das innere Teilpaket 23 koaxial innerhalb des äußeren Teilpakets 24 anzuordnen.

Die Teilpakete 23,24 sind aus einzelnen aufeinander gestapelten ringförmigen Statorblechen 21,22 aufgebaut. Die Statorbleche 21 des äußeren Teilpakets 24 sind mit auf dem äußeren Umfang verteilt positionierten Ausnehmungen zur Ausbildung der äußeren Statornuten 19 gefertigt. Die Statorbleche 22 des inneren Teilpakets 23 sind mit auf dem inneren Umfang verteilt positionierten Ausnehmungen zur Ausbildung der inneren Statornuten 20 gefertigt. Beispielsweise ist eine Fertigung derartiger Statorbleche durch Stanzen aufgrund der Kantengüte und sehr geringen Herstellungskosten vorteilhaft.

Die inneren und äußeren Statornuten 19,20 beschreiben zueinander mit gleicher Steigung entgegengesetzt verlaufende Schraubenlinien, welche durch den eingezeichneten überstrichenen Winkel der Statornuten α charakterisiert werden. Der überstrichene Winkel der Statornuten α lässt sich aus dem Winkel zwischen der Position derselben Statornut auf einer axialen Seite des Statorkerns 2 und auf der anderen axialen Seite des Statorkerns 2 in Bezug auf die Mittelachse M definieren.

Die Statornuten 19,20 sind hier beispielhaft als T-Nuten mit einer rechteckigen Ausnehmung mit verjüngter Öffnung ausgebildet. Diese sind insbesondere zur formschlüssigen Aufnahme von Leiterstäben mit rechteckigem Querschnitt vorgesehen. Selbstverständlich kann die Geometrie der Ausnehmungen bzw. Statornuten an die Leitergeometrie angepasst werden. Denkbar wären dazu auch andere Querschnittsformen.

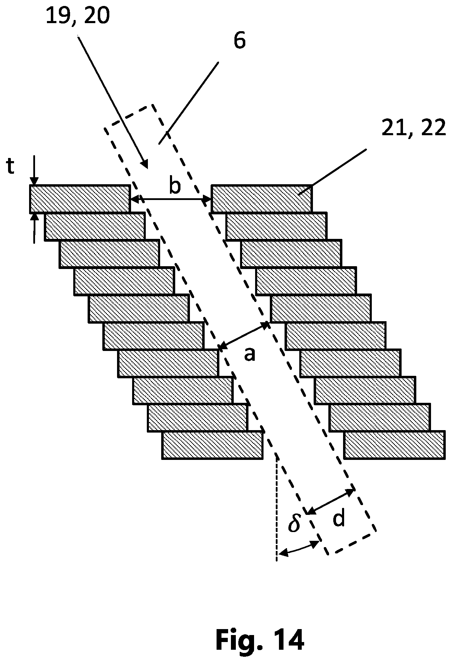

Fig. 14 zeigt eine schematische Längsschnittdarstellung einer Statornut 19, 20.

Die nutzbare bzw. durchgängige lichte Breite a der Statornuten 19,20 innerhalb des Statorblechpakets 18 ist im Wesentlichen gleich der Breite der innerhalb des Statorkerns 2 aufgenommenen Leiterstäbe 6 ausgebildet.

Die Statorbleche 21, 22 weisen gerade, insbesondere gestanzte, Kanten auf. Aufgrund des Versatzes der Bleche zueinander ist eine Breite b der für die Statornuten 19, 20 vorgesehenen Ausnehmungen um einen durch die Steigung δ der Schraubenform des Verlaufs und die Blechstärke t vorbestimmten Betrag größer als die Breite d der Leiterstäbe 6 ausgebildet.

In Fig. 14 ist ein Leiterstab 6 mit gestrichelten Linien in der Statornut 19, 20 schematisch eingezeichnet, wobei die durchgängige lichte Breite a der Statornut 19, 20 zur Bereitstellung einer Spielpassung geringfügig größer als die Breite d des Leiterstabs 6 und die Breite a der Ausnehmung im Statorblech 21, 22 wiederum deutlich größer als die lichte Breite b ausgebildet ist.

Die Blechstärke t und der Anstellwinkel δ der Steigung des Nutverlaufs stellen bei geraden, beispielsweise gestanzten, Blechkanten einen merklichen Einflussfaktor für den Unterschied zwischen der Breite b der Ausnehmung und der lichten Breite a des nutzbaren Durchgangs innerhalb der Nut dar. Der Unterschied kommt zustande, da der Steigungswinkel einerseits und die treppenförmige Stufigkeit des Blechpakets andererseits auszugleichen ist.

Eine Mindestgröße der Breite a der Ausnehmung für den Grenzfall unendlich dünner Bleche, das heißt einer reinen Betrachtung des Steigungswinkels δ des Leiterstabs, wäre hierbei $b = 1 / cos \left(δ\right) * d .$

Um einerseits zusätzlich die tatsächlich vorhandene Blechdicke zu kompensieren und andererseits eine Spielpassung bereitzustellen, welche das Einführen der Leiterstäbe erlaubt, ist die Breite b der Ausnehmung tatsächlich noch größer vorgesehen.

Die Breite b der Ausnehmungen gemäß Fig. 9 ist derart bemessen, dass eine durch den Versatz zwischen den Ausnehmungen der Statorbleche verringerte lichte Breite a der Statornuten 19, 20 eine vorbestimmte Spielpassung mit der Breite d eines in die Statornut einzuführenden Leiterstabs 6 bildet, der Kontakt aber dennoch eng genug ist, um zur gleichmäßig verteilten Kraftübertragung bzw. Drehmomentabstützung zwischen Statorbleckpaket und Wicklung zu dienen. Eine derartige Bemessung ist unter anderem dadurch ermöglicht, dass einerseits jedes Statorblech gleich mit hoher Kantengüte ausgebildet und mit gleichem Versatz verdreht ist, und andererseits in jeder Statornut 19,20 lediglich ein einzelner Leiterstab 6 platziert wird, dessen Maße konstant sind.

Insbesondere handelt es sich in der dargestellten Ausführungsform bei dem Leiterstab 6 um einen Rechteckstab mit mehreren Millimetern Kantenlänge bzw. Breite, beispielsweise im Bereich von 2 mm bis 6 mm, insbesondere im Bereich von 3 mm bis 5 mm. Vorzugsweise kann es sich um ein Rechteckprofil von 5 mm x 3 mm handeln.

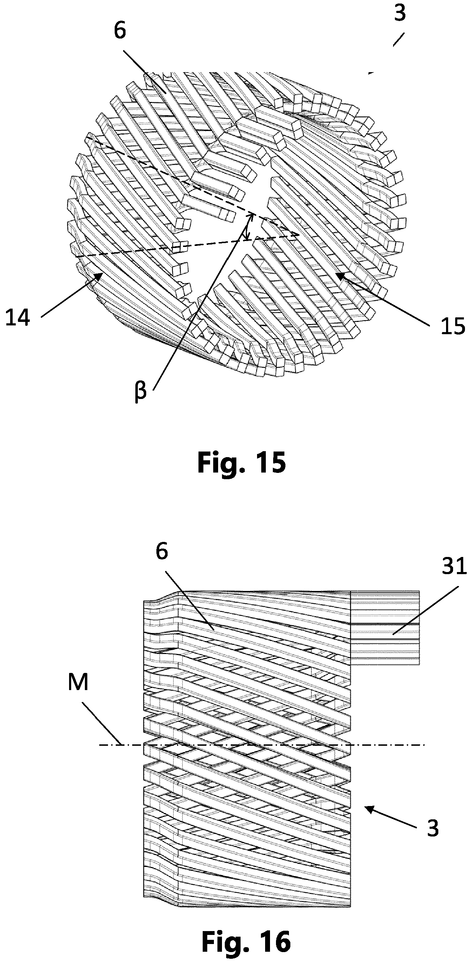

Fig. 15 zeigt eine perspektivische Darstellung einer Wicklung 3.

Die Wicklung 3 ist aus den besagten Leiterstäben 6 aufgebaut, welche schraubenförmig entlang der Mittelachse M verlaufen. Dazu sind die Leiterstäbe 6 nicht nur entsprechend verschränkt angeordnet, sondern auch gemäß dem Schraubenlinienverlauf in sich tordiert.

Der überstrichene Winkel β der Leiterstäbe 6 identifiziert den Winkel zwischen Anfang und Ende eines Leiterstabs 6 relativ zu Mittelachse M. Da die Steigung der Schraubenlinie der Leiterstäbe 6 gleich der Steigung der Schraubenlinie der Statornuten 19, 20 ist, die Leiterstäbe 6 aber länger als die Statornuten ausgebildet sind, lässt sich ein Verhältnis der jeweiligen überstrichenen Winkel α und β zur Charakterisierung der geometrischen Verhältnisse bilden, welches auch als Polbedeckungsgrad bezeichnet wird. Um ein Optimum zwischen magnetischen Verlusten und Drehmomentausnutzung einer Radialfluss-Doppelrotormaschine bereitzustellen liegt dieses Verhältnis (Polbedeckungsgrad) vorzugsweise in einem Bereich zwischen 0.6 und 0.75.

Die entgegengesetzte Verdrehung und Torsion der inneren und äußeren radialen Lagen 14, 15 von Leiterstäben 6 ist hier ebenfalls zu erkennen. Die Torsion ist derart ausgelegt, dass der Querschnitt in Bezug auf eine radiale Linie durch die Mitte des Leiterstabs an jeder Stelle des Leiterstabs stets gleich ist, was auch als 2,5 D Geometrie bezeichnet wird. Somit werden die Leiterstabenden der inneren und äußeren Lagen 14, 15 in einer gleichen Ausrichtung übereinander angeordnet. Die Leiterstäbe 6 der radialen inneren und äußeren Lagen 14, 15 können somit auf einfache Weise leitend verbunden werden, hier beispielhaft werden die ersten und zweiten Leiterstabenden 6a, 6b gefügt.

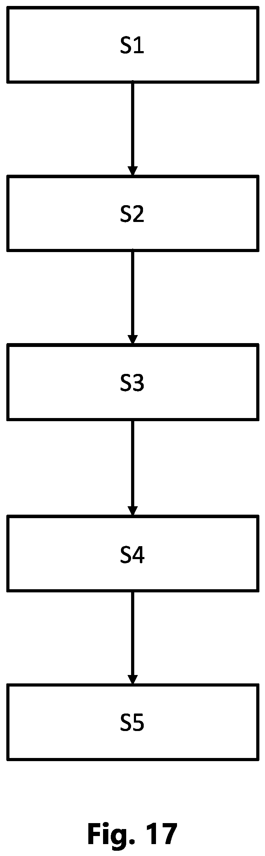

Anzumerken ist, dass die hier dargestellte Wicklung an sich nicht einzeln, sondern stets im Verbund mit dem Statorkern 2 hergestellt wird, worauf in Bezug auf Fig. 17 näher eingegangen wird.

Fig. 16 zeigt eine Draufsicht einer Wicklung 3.

Gut zu erkennen ist in dieser Ansicht die exakt radiale Ausrichtung der Leiterstäbe 6 an jeder Stelle ihres schraubenförmigen Verlaufs, welche in der dargestellten Perspektive im Bereich der Mittelachse M fluchtet. Die ersten und zweiten Leiterstabenden 6a, 6b bilden jeweils den Verbindungspunkt zwischen der inneren und äußeren radialen Lage 14, 15.

In der dargestellten Ausführungsform weist die Wicklung 3 beispielhaft insgesamt zwölf Anschlusskontakte 31 auf. Bei dreisträngiger Verschaltung ist vorzugsweise ein dreiphasiger Betrieb vorgesehen. Die Wicklung 3 ist jedoch in fachmännisch bekannter Weise auf andere Verschaltungen zu einer drehfelderzeugenden Wicklung beliebiger Strangzahl anpassbar.

Eine FEM Simulation einer Wicklung 3 unter Last im Wesentlichen mit der in Fig. 15 dargestellten Wicklungsgeometrie zeigte erkennbar, dass sich die Spannungen innerhalb der Wicklung 3 aufgrund der Schraubenliniengeometrie sehr vorteilhaft homogen verteilen.

Die Leiterstabenden 6a, 6b waren in der FEM Simulation durch einen überstrichenen Winkel der Leiterstäbe β > 0 definiert, das heißt schraubenförmig angeordnet und ausgebildet bzw. entsprechend tordiert geformt. An dem axialen Ende, an welchem die Trägereinrichtung eingreift, wurde ein maximales Drehmoment der entsprechend dimensionierten Radialfluss-Doppelrotormaschine 10 aufgetragen, wobei es sich beispielhaft im Falle eines Rechteckprofils der Leiterstäbe 6 von 5 mm x 3 mm um etwa 5000 Nm handeln kann. Es ist dabei auch bei starker Überhöhung kaum eine Verformung zu erkennen.

Aufgrund dieser Ausführung sind somit Spannungsspitzen und damit auch die Verformung deutlich reduziert.

Durch die stabwerkartige Struktur kann bei Fixierung eines axial zugänglichen Wicklungsendes somit ein hohes Drehmoment von der Wicklung 3 selbsttragend aufgenommen werden, ohne unzulässig große Verformungen und/oder Spannungszustände hervorzurufen. Das ist insbesondere damit zu begründen, dass in dem Stabwerk die Leiterstäbe 6 bei Beaufschlagung mit Tangentialkraft vorwiegend Zug- und Druckspannungen aufnehmen.

Gegenüber Ausführungen mit achsparallelen, geraden Leitern können die mechanischen Spannungen so signifikant gesenkt werden.

Bei einem FEM Vergleichsmodell mit gerader Ausführung und rein axialem Verlauf der Leiterstäbe 6 unter Last ist aufgrund der geraden Ausführung und des axialen Verlaufs der Leiterstäbe 6 ein auf eine Seite konzentrierter Spannungsverlauf und eine aus der lokal hohen Spannung resultierende starke Verformung der Leiterstäbe 6 mit großer Auslenkung an der anderen Seite erkennbar. Es handelt sich hier um eine sehr viel größere Verformung als bei der Wicklung 3 mit Schraubenliniengeometrie, was die Auswirkung der unterschiedlichen strukturellen Anordnungen auf die Torsionssteifigkeit deutlich erkennen lässt.

Fig. 17 zeigt ein Ablaufdiagramm eines Verfahrens zur Herstellung eines Stators 1.

Das Verfahren umfasst einen ersten Schritt des Bereitstellens S1 eines Statorkerns 2 mit jeweils eine Schraubenlinie beschreibenden radial außen liegenden Statornuten 19 und jeweils eine Schraubenlinie mit entgegengesetzter Windungsrichtung beschreibenden radial innen liegenden Statornuten 20.

Ferner umfasst das Verfahren einen zweiten Schritt des Bereitstellens S2 von einzelnen Leiterstäben 6, die an einem ersten Leiterstabende 6a gekröpft und an einem zweiten Leiterstabende 6b ungekröpft ausgebildet sind.

Ein weiterer Schritt betrifft das Einführen S3 der einzelnen Leiterstäbe 6 an einem ersten axialen Ende 2a des Statorkerns 2 in die radial äußeren Statornuten 19, derart, dass an dem ersten axialen Ende 2a die Kröpfung der ersten Leiterstabenden 6a der Leiterstäbe 6 der radial äußeren Lage 14 nach radial innen ausgerichtet ist.

Ein weiterer Schritt betrifft das Einführen S4 der einzelnen Leiterstäbe 6 an einem zweiten axialen Ende 2b des Statorkerns 2 in die radial inneren Statornuten 20, derart, dass an dem zweiten axialen Ende 2b die Kröpfung der ersten Leiterstabenden 6a der Leiterstäbe 6 der radial inneren Lage 15 nach radial außen ausgerichtet ist.

Ferner umfasst das Verfahren eine Schritt des Fügens S5 der in die inneren und äußeren Statornuten 19, 20 eingeführten Leiterstäbe 6 an den Leiterstabenden 6a, 6b zur Ausbildung von Leiterschleifen, wobei an dem ersten axialen Ende 2a des Statorkerns 2 jeweils die ersten Leiterstabenden 6a der Leiterstäbe 6 der radial äußeren Lage 14 mit den zweiten Leiterstabenden 6b der Leiterstäbe 6 der radial inneren Lage 15 und an dem zweiten axialen Ende 2b des Statorkerns 2 jeweils die ersten Leiterstabenden 6a der Leiterstäbe 6 der radial inneren Lage 15 mit den zweiten Leiterstabenden 6b der Leiterstäbe 6 der radial äußeren Lage 14 gefügt werden.

Ferner kann das Verfahren einen Schritt nach dem Einführen umfassen, wobei die ersten Leiterstabenden 6a im Überlapp mit den zweiten Leiterstabenden 6b liegen und bei dem Fügen im Überlappstoß gefügt werden, insbesondere durch Laserstrahlschweißen.

Obwohl die vorliegende Erfindung anhand bevorzugter Ausführungsbeispiele vorstehend vollständig beschrieben wurde, ist sie darauf nicht beschränkt, sondern kann innerhalb des Schutzumfangs der beigefügten Ansprüche auf vielfältige Weise modifiziert werden.

### Bezugszeichenliste

- 1: Stator
- 2: Statorkern
- 3: Wicklung
- 4: axiales Ende
- 5: Trägereinrichtung
- 6: Leiterstab
- 7: erste Schenkel
- 8: zweite Schenkel
- 9: Bohrung
- 10: Radialfluss-Doppelrotormaschine
- 11: Basis
- 12: erster Rotor
- 13: zweiter Rotor
- 14: radial äußere Lage
- 15: radial innere Lage
- 16: Leiterstabenden
- 17: Leiterstabstück
- 18: Statorblechpaket
- 19,20: Statornuten
- 21,22: Statorbleche
- 23: inneres Teilpaket
- 24: äußeres Teilpaket
- 25: Trägerelement
- 26: Trägernuten
- 27: inneres Trägerelement
- 28: äußeres Trägerelement
- 29: Permanentmagnet
- 30: Statorjoch
- 31: Anschlusskontakte
- α: überstrichener Winkel Statornuten
- β: überstrichener Winkel Leiterstäbe
- δ: Steigung

- a: lichte Breite
- b: Breite der Ausnehmung
- d: Breite eines Leiterstabs
- M: Mittelachse
- t: Blechstärke

## Patentansprüche

1. Stator (1) für eine Radialfluss-Doppelrotormaschine (10), insbesondere für einen Radnabenmotor, mit:
einem Statorkern (2) mit jeweils eine Schraubenlinie beschreibenden radial außenliegenden Statornuten (19) und jeweils eine Schraubenlinie mit entgegengesetzter Windungsrichtung beschreibenden radial innen liegenden Statornuten (20);
einer in dem Statorkern (2) platzierten Wicklung (3), welche zur Drehmomentabstützung des Stators (1) selbsttragend ausgeführt ist, wobei die Wicklung (3) an zumindest einem axialen Ende (4) über den Statorkern (2) hinausragt;
einer axial zu dem Statorkern (2) versetzt angeordneten Trägereinrichtung (5), welche zum formschlüssigen Eingriff mit der Wicklung (3) an dem zumindest einen axialen Ende (4) zur Drehmomentabstützung ausgebildet ist;
wobei die Wicklung (3) aus miteinander verbundenen Leiterstäben (6) gebildet ist und eine radial innere Lage (15) von schraubenförmig angeordneten Leiterstäben (6) und eine radial äußere Lage (14) von entgegengesetzt schraubenförmig angeordneten Leiterstäben (6) aufweist,
wobei die Leiterstäbe (6) jeweils an einem ersten Leiterstabende (6a) gekröpft und an einem zweiten Leiterstabende (6b) ungekröpft ausgebildet sind,
wobei die ersten Leiterstabenden (6a) der Leiterstäbe (6) der radial äußeren Lage (14) derart angeordnet sind, dass die Kröpfung jeweils nach radial innen ausgerichtet ist, und die ersten Leiterstabenden (6a) der Leiterstäbe (6) der radial inneren Lage (15) derart angeordnet sind, dass die Kröpfung jeweils nach radial außen ausgerichtet ist,
wobei an dem ersten axialen Ende (2a) des Statorkerns (2) jeweils die ersten Leiterstabenden (6a) der Leiterstäbe (6) der radial äußeren Lage (14) mit den zweiten Leiterstabenden (6b) der Leiterstäbe (6) der radial inneren Lage (15) und an dem zweiten axialen Ende (2b) des Statorkerns (2) jeweils die ersten Leiterstabenden (6a) der Leiterstäbe (6) der radial inneren Lage (15) mit den zweiten Leiterstabenden (6b) der Leiterstäbe (6) der radial äußeren Lage (14) verbunden sind.

2. Stator (1) nach Anspruch 1, wobei zur Ausbildung von Leiterschleifen jeweils die ersten Leiterstabenden (6a) der Leiterstäbe (6) der radial äußeren Lage (14) mit den zweiten Leiterstabenden (6b) der Leiterstäbe (6) der radial inneren Lage (15) gefügt sind und jeweils die ersten Leiterstabenden (6a) der Leiterstäbe (6) der radial inneren Lage (15) mit den zweiten Leiterstabenden (6b) der Leiterstäbe (6) der radial äußeren Lage (14) gefügt sind.

3. Stator (1) nach Anspruch 1,
wobei die Leiterstäbe (6) der radial äußeren Lage (14) in äußeren Statornuten (19) aufgenommen und mit dem ersten Leiterstabende (6a) an einem ersten axialen Ende (2a) des Statorkerns (2) angeordnet, und
die Leiterstäbe (6) der radial inneren Lage (15) in inneren Statornuten (20) aufgenommen und mit dem ersten Leiterstabende (6a) an einem zweiten axialen Ende (2b) des Statorkerns (2) angeordnet sind,
wobei zur Ausbildung von Leiterschleifen an dem ersten axialen Ende (2a) jeweils die ersten Leiterstabenden (6a) der Leiterstäbe (6) der radial äußeren Lage (14) mit den zweiten Leiterstabenden (6b) der Leiterstäbe (6) der radial inneren Lage (15) gefügt sind, und
an dem zweiten axialen Ende (2b) jeweils die ersten Leiterstabenden (6a) der Leiterstäbe (6) der radial inneren Lage (15) mit den zweiten Leiterstabenden (6b) der Leiterstäbe (6) der radial äußeren Lage (14) gefügt sind.

4. Stator (1) nach Anspruch 2 oder 3,
**dadurch gekennzeichnet,**
**dass** die ersten Leiterstabenden (6a) mit den zweiten Leiterstabenden (6b) im Überlappstoß gefügt sind, insbesondere durch Laserstrahlschweißen.

5. Stator (1) nach einem der vorstehenden Ansprüche, wobei eine radiale Tiefe der Kröpfung jeweils einem radialen Abstand der radial inneren Lage (15) und der radial äußeren Lage (14) der Leiterstäbe (6) innerhalb des Statorkerns (2) entspricht.

6. Stator (1) nach einem der vorstehenden Ansprüche,
**dadurch gekennzeichnet,**
**dass** die Leiterstäbe (6) ausgehend von dem ersten Leiterstabende (6a) jeweils über eine Strecke im Bereich von etwa 5% bis etwa 25%, bevorzugt etwa 10% bis etwa 20%, besonders bevorzugt etwa 12% bis etwa 18%, der gesamten Länge des jeweiligen Leiterstabs (6) gekröpft geformt sind.

7. Stator (1) nach einem der vorstehenden Ansprüche, wobei die Kröpfung als ein doppeltes Abwinkeln ausgeführt ist.

8. Verfahren zur Herstellung eines Stators (1) für eine Radialfluss-Doppelrotormaschine (10), insbesondere eines Stators (1) nach Anspruch 1, mit den Schritten:
Bereitstellen eines Statorkerns (2) mit jeweils eine Schraubenlinie beschreibenden radial außenliegenden Statornuten (19) und jeweils eine Schraubenlinie mit entgegengesetzter Windungsrichtung beschreibenden radial innen liegenden Statornuten (20);
Bereitstellen von einzelnen Leiterstäben (6), die an einem ersten Leiterstabende (6a) gekröpft und an einem zweiten Leiterstabende (6b) ungekröpft ausgebildet sind;
Einführen der einzelnen Leiterstäbe (6) an einem ersten axialen Ende (2a) des Statorkerns (2) in die radial äußeren Statornuten (19), derart, dass an dem ersten axialen Ende (2a) die Kröpfung der ersten Leiterstabenden (6a) der Leiterstäbe (6) der radial äußeren Lage (14) nach radial innen ausgerichtet ist;
Einführen der einzelnen Leiterstäbe (6) an einem zweiten axialen Ende (2b) des Statorkerns (2) in die radial inneren Statornuten (20), derart, dass an dem zweiten axialen Ende (2b) die Kröpfung der ersten Leiterstabenden (6a) der Leiterstäbe (6) der radial inneren Lage (15) nach radial außen ausgerichtet ist; und
Fügen der in die inneren und äußeren Statornuten (19, 20) eingeführten Leiterstäbe (6) an den Leiterstabenden (6a, 6b) zur Ausbildung von Leiterschleifen, wobei an dem ersten axialen Ende (2a) des Statorkerns (2) jeweils die ersten Leiterstabenden (6a) der Leiterstäbe (6) der radial äußeren Lage (14) mit den zweiten Leiterstabenden (6b) der Leiterstäbe (6) der radial inneren Lage (15) und an dem zweiten axialen Ende (2b) des Statorkerns (2) jeweils die ersten Leiterstabenden (6a) der Leiterstäbe (6) der radial inneren Lage (15) mit den zweiten Leiterstabenden (6b) der Leiterstäbe (6) der radial äußeren Lage (14) gefügt werden.

9. Verfahren nach Anspruch 8,
**dadurch gekennzeichnet,**
**dass** nach dem Einführen die ersten Leiterstabenden (6a) im Überlapp mit den zweiten Leiterstabenden (6b) liegen und bei dem Fügen im Überlappstoß gefügt werden, insbesondere durch Laserstrahlschweißen.

10. Radialfluss-Doppelrotormaschine (10), insbesondere für einen Radnabenantrieb, mit:
einem Stator (1) gemäß einem der Ansprüche 1 bis 7 oder hergestellt mit einem Verfahren gemäß einem der Ansprüche 8 bis 9;
einem radial innerhalb des Statorkerns (2) des Stators (1) angeordneten ersten Rotor (12); und
einem radial außerhalb des Statorkerns (2) des Stators (1) angeordneten zweiten Rotor (13).

## Claims

1. Stator (1) for a radial-flux double rotor machine (10), in particular for a wheel hub motor, comprising:
a stator core (2), with radially outer stator slots (19) each describing a helix and radially inner stator slots (20) each describing a helix of the opposite winding direction;
a winding (3) placed in the stator core (2) and configured to be self-supporting for torque support of the stator (1), the winding (3) projecting beyond the stator core (2) at at least one axial end (4);
a carrier device (5) arranged axially offset from the stator core (2) and configured for positive engagement with the winding (3) at the at least one axial end (4) for torque support;
wherein the winding (3) is formed from interconnected conductor bars (6) and has a radially inner layer (15) of helically arranged conductor bars (6) and a radially outer layer (14) of oppositely helically arranged conductor bars (6),
wherein the conductor bars (6) each are bent at a first conductor bar end (6a) and unbent at a second conductor bar end (6b),
wherein the first conductor bar ends (6a) of the conductor bars (6) in the radially outer layer (14) are arranged in such a way that the bend is orientated radially inwards in each case, and the first conductor bar ends (6a) of the conductor bars (6) in the radially inner layer (15) are arranged in such a way that the bend is orientated radially outwards in each case,
wherein the first conductor bar ends (6a) of the conductor bars (6) in the radially outer layer (14) are respectively connected, at the first axial end (2a) of the stator core (2), to the second conductor bar ends (6b) of the conductor bars (6) in the radially inner layer (15), and the first conductor bar ends (6a) of the conductor bars (6) in the radially inner layer (15) are respectively connected, at the second axial end (2b) of the stator core (2), to the second conductor bar ends (6b) of the conductor bars (6) in the radially outer layer (14).

2. Stator (1) according to claim 1, wherein, to form conductor loops, the first conductor bar ends (6a) of the conductor bars (6) in the radially outer layer (14) are respectively joined to the second conductor bar ends (6b) of the conductor bars (6) in the radially inner layer (15), and the first conductor bar ends (6a) of the conductor bars (6) in the radially inner layer (15) are respectively joined to the second conductor bar ends (6b) of the conductor bars (6) in the radially outer layer (14).

3. Stator (1) according to claim 1,
wherein the conductor bars (6) in the radially outer layer (14) are received in outer stator slots (19) and arranged with the first conductor bar end (6a) at a first axial end (2a) of the stator core (2), and
the conductor bars (6) in the radially inner layer (15) are received in inner stator slots (20) and arranged with the first conductor bar end (6a) at a second axial end (2b) of the stator core (2),
wherein, to form conductor loops at the first axial end (2a),
the first conductor bar ends (6a) of the conductor bars (6) in the radially outer layer (14) are respectively joined to the second conductor bar ends (6b) of the conductor bars (6) in the radially inner layer (15), and
the first conductor bar ends (6a) of the conductor bars (6) in the radially inner layer (15) are respectively joined, at the second axial end (2b), to the second conductor bar ends (6b) of the conductor bars (6) in the radially outer layer (14).

4. Stator (1) according to either claim 2 or claim 3,
**characterised**
**in that** the first conductor bar ends (6a) are joined to the second conductor bar ends (6b) in an overlap joint, in particular by laser beam welding.

5. Stator (1) according to any of the preceding claims,
wherein a radial depth of the bend corresponds in each case to a radial distance between the radially inner layer (15) and the radially outer layer (14) of the conductor bars (6) within the stator core (2).

6. Stator (1) according to any of the preceding claims,
**characterised**
**in that** the conductor bars (6) are each bent, starting from the first conductor bar end (6a), over a distance in a range of approximately 5% to approximately 25%, preferably approximately 10% to approximately 20%, particularly preferably approximately 12% to approximately 18%, of the total length of the conductor bar (6) in question.

7. Stator (1) according to any of the preceding claims,
wherein the bend is configured as a double elbow.

8. Method for manufacturing a stator (1) for a radial-flux double rotor machine (10), in particular a stator (1) according to claim 1, comprising the steps of:
providing a stator core (2), with radially outer stator slots (19) each describing a helix and radially inner stator slots (20) each describing a helix of the opposite winding direction;
providing individual conductor bars (6) which are bent at a first conductor bar end (6a) and unbent at a second conductor bar end (6b);
inserting the individual conductor bars (6), at a first axial end (2a) of the stator core (2), into the radially outer stator slots (19) in such a way that, at the first axial end (2a), the bend of the first conductor bar ends (6a) of the conductor bars (6) in the radially outer layer (14) is orientated radially inwards;
inserting the individual conductor bars (6), at a second axial end (2b) of the stator core (2), into the radially inner stator slots (20) in such a way that, at the second axial end (2b), the bend of the first conductor bar ends (6a) of the conductor bars (6) in the radially inner layer (15) is orientated radially outwards; and
joining the conductor bars (6) inserted into the inner and outer stator slots (19, 20) at the conductor bar ends (6a, 6b) to form conductor loops, the first conductor bar ends (6a) of the conductor bars (6) in the radially outer layer (14) being respectively joined, at the first axial end (2a) of the stator core (2), to the second conductor bar ends (6b) of the conductor bars (6) in the radially inner layer (15), and the first conductor bar ends (6a) of the conductor bars (6) in the radially inner layer (15) being respectively joined, at the second axial end (2b) of the stator core (2), to the second conductor bar ends (6b) of the conductor bars (6) in the radially outer layer (14).

9. Method according to claim 8,
**characterised**
**in that**, after insertion, the first conductor bar ends (6a) are positioned overlapping with the second conductor bar ends (6b) and, when joined, are joined in an overlap joint, in particular by laser beam welding.

10. Radial-flux double rotor machine (10), in particular for a wheel hub drive, comprising:
a stator (1) according to any of claims 1 to 7 or manufactured by a method according to any of claims 8 to 9;
a first rotor (12) arranged radially inside the stator core (2) of the stator (1); and
a second rotor (13) arranged radially outside the stator core (2) of the stator (1).

## Revendications

1. Stator (1) pour une machine à double rotor à flux radial (10), en particulier pour un moteur de moyeu de roue, comportant :
un noyau de stator (2) ayant des encoches de stator (19) situées radialement à l'extérieur et décrivant respectivement une ligne hélicoïdale, et des encoches de stator (20) situées radialement à l'intérieur et décrivant respectivement une ligne hélicoïdale ayant un sens d'enroulement opposé ;
un enroulement (3) placé dans le noyau de stator (2), qui est conçu pour supporter le couple du stator (1) de manière autoportante, l'enroulement (3) faisant saillie au-delà du noyau de stator (2) à au moins une extrémité axiale (4) ;
un dispositif de support (5) disposé de façon axialement décalée par rapport au noyau de stator (2), qui est formé pour venir en prise par complémentarité de formes avec l'enroulement (3) au niveau de ladite au moins une extrémité axiale (4) afin de supporter le couple ;
dans lequel l'enroulement (3) est formé de barres conductrices (6) reliées les unes aux autres et comporte une couche radialement intérieure (15) de barres conductrices (6) disposées de manière hélicoïdale, et une couche radialement extérieure (14) de barres conductrices (6) disposées de manière hélicoïdale dans le sens opposé,
dans lequel les barres conductrices (6) sont respectivement formées de manière coudée à une première extrémité de barre conductrice (6a) et non coudée à une seconde extrémité de barre conductrice (6b),
dans lequel les premières extrémités de barre conductrice (6a) des barres conductrices (6) de la couche radialement extérieure (14) sont disposées de telle sorte que le coude est respectivement orienté radialement vers l'intérieur, et les premières extrémités de barre conductrice (6a) des barres conductrices (6) de la couche radialement intérieure (15) sont disposées de telle sorte que le coude est respectivement orienté radialement vers l'extérieur,
dans lequel, au niveau de la première extrémité axiale (2a) du noyau de stator (2), les premières extrémités de barre conductrice (6a) des barres conductrices (6) de la couche radialement extérieure (14) sont respectivement reliées aux secondes extrémités de barre conductrice (6b) des barres conductrices (6) de la couche radialement intérieure (15) et, au niveau de la seconde extrémité axiale (2b) du noyau de stator (2), les premières extrémités de barre conductrice (6a) des barres conductrices (6) de la couche radialement intérieure (15) sont respectivement reliées aux secondes extrémités de barre conductrice (6b) des barres conductrices (6) de la couche radialement extérieure (14).

2. Stator (1) selon la revendication 1, dans lequel, pour former des boucles conductrices, les premières extrémités de barre conductrice (6a) des barres conductrices (6) de la couche radialement extérieure (14) sont respectivement assemblées avec les secondes extrémités de barre conductrice (6b) des barres conductrices (6) de la couche radialement intérieure (15), et les premières extrémités de barre conductrice (6a) des barres conductrices (6) de la couche radialement intérieure (15) sont respectivement assemblées avec les secondes extrémités de barre conductrice (6b) des barres conductrices (6) de la couche radialement extérieure (14).

3. Stator (1) selon la revendication 1,
dans lequel les barres conductrices (6) de la couche radialement extérieure (14) sont reçues dans des encoches de stator extérieures (19) et disposées avec la première extrémité de barre conductrice (6a) à une première extrémité axiale (2a) du noyau de stator (2), et
les barres conductrices (6) de la couche radialement intérieure (15) sont reçues dans des encoches de stator intérieures (20) et disposées avec la première extrémité de barre conductrice (6a) à une seconde extrémité axiale (2b) du noyau de stator (2),
dans lequel, pour former des boucles conductrices au niveau de la première extrémité axiale (2a), les premières extrémités de barre conductrice (6a) des barres conductrices (6) de la couche radialement extérieure (14) sont respectivement assemblées avec les secondes extrémités de barre conductrice (6b) des barres conductrices (6) de la couche radialement intérieure (15), et
au niveau de la seconde extrémité axiale (2b), les premières extrémités de barre conductrice (6a) des barres conductrices (6) de la couche radialement intérieure (15) sont respectivement assemblées avec les secondes extrémités de barre conductrice (6b) des barres conductrices (6) de la couche radialement extérieure (14).

4. Stator (1) selon la revendication 2 ou 3,
**caractérisé en ce**
**que** les premières extrémités de barre conductrice (6a) sont assemblées à recouvrement avec les secondes extrémités de barre conductrice (6b), en particulier par un soudage par faisceau laser.

5. Stator (1) selon l'une des revendications précédentes, dans lequel une profondeur radiale du coude correspond respectivement à une distance radiale de la couche radialement intérieure (15) et de la couche radialement extérieure (14) des barres conductrices (6) à l'intérieur du noyau de stator (2).

6. Stator (1) selon l'une des revendications précédentes,
**caractérisé en ce**
**que** les barres conductrices (6) à partir de la première extrémité de barre conductrice (6a) sont respectivement formées de manière coudée sur une distance située dans l'intervalle d'environ 5 % à environ 25 %, de manière préférée d'environ 10 % à environ 20 %, de manière particulièrement préférée d'environ 12 % à environ 18 %, de toute la longueur de la barre conductrice (6) respective.

7. Stator (1) selon l'une des revendications précédentes, dans lequel le coude est réalisé sous la forme d'un double pliage.

8. Procédé pour fabriquer un stator (1) pour une machine à double rotor à flux radial (10), en particulier un stator (1) selon la revendication 1, comportant les étapes consistant à :
fournir un noyau de stator (2) ayant des encoches de stator (19) situées radialement à l'extérieur et décrivant respectivement une ligne hélicoïdale, et des encoches de stator (20) situées radialement à l'intérieur et décrivant respectivement une ligne hélicoïdale ayant un sens d'enroulement opposé ;
fournir des barres conductrices (6) individuelles qui sont formées de manière coudée à une première extrémité de barre conductrice (6a) et non coudée à une seconde extrémité de barre conductrice (6b),
introduire les barres conductrices (6) individuelles à une première extrémité axiale (2a) du noyau de stator (2) dans les encoches de stator radialement extérieures (19) de telle sorte que, au niveau de la première extrémité axiale (2a), le coude des premières extrémités de barre conductrice (6a) des barres conductrices (6) de la couche radialement extérieure (14) est orienté radialement vers l'intérieur ;
introduire les barres conductrices (6) individuelles à une seconde extrémité axiale (2b) du noyau de stator (2) dans les encoches de stator radialement intérieures (20) de telle sorte que, au niveau de la seconde extrémité axiale (2b), le coude des premières extrémités de barre conductrice (6a) des barres conductrices (6) de la couche radialement intérieure (15) est orienté radialement vers l'extérieur ; et
assembler les barres conductrices (6) introduites dans les encoches de stator intérieures et extérieures (19, 20) aux extrémités de barre conductrice (6a, 6b) afin de former des boucles conductrices, dans lequel, au niveau de la première extrémité axiale (2a) du noyau de stator (2), les premières extrémités de barre conductrice (6a) des barres conductrices (6) de la couche radialement intérieure (14) sont respectivement assemblées avec les secondes extrémités de barre conductrice (6b) des barres conductrices (6) de la couche radialement intérieure (15) et, au niveau de la seconde extrémité axiale (2b) du noyau de stator (2), les premières extrémités de barre conductrice (6a) des barres conductrices (6) de la couche radialement intérieure (15) sont respectivement assemblées avec les secondes extrémités de barre conductrice (6b) des barres conductrices (6) de la couche radialement extérieure (14).

9. Procédé selon la revendication 8,
**caractérisé en ce**
**que**, après l'introduction, les premières extrémités de barre conductrice (6a) sont en recouvrement avec les secondes extrémités de barre conductrice (6b) et sont assemblées à recouvrement lors de l'assemblage, en particulier par un soudage par faisceau laser.

10. Machine à double rotor à flux radial (10), en particulier pour un entraînement de moyeu de roue, comportant :
un stator (1) selon l'une des revendications 1 à 7 ou fabriqué par un procédé selon l'une des revendications 8 à 9 ;
un premier rotor (12) agencé radialement à l'intérieur du noyau de stator (2) du stator (1) ; et
un second rotor (13) agencé radialement à l'extérieur du noyau de stator (2) du stator (1).
